# EUROPEAN PATENT SPECIFICATION

(11) **EP 3 772 853 B1**
(45) Date of publication and mention of the grant of the patent: **19.06.2024**
(21) Application number: 18914708.5
(22) Date of filing: 13.12.2018
(51) Int. Cl.: H04N 19/167, H04N 19/105, H04N 19/503, H04N 19/597, H04N 19/85

(54) **METHOD AND DEVICE FOR POINT CLOUD CODING**
VERFAHREN UND VORRICHTUNG ZUR KODIERUNG VON PUNKTWOLKEN
PROCEDÉ ET DISPOSITIF DE CODAGE DE NUAGES DE POINTS

(30) Priority: 09.04.2018 US 201862655019 P
(43) Date of publication of application: 10.02.2021
(73) Proprietor: HUAWEI TECHNOLOGIES CO., LTD., Shenzhen, Guangdong 518129 (CN)
(72) Inventor: ZHANG, Dejun, Shenzhen, Guangdong 518129 (CN); ZAKHARCHENKO, Vladyslav, Shenzhen, Guangdong 518129 (CN); CHEN, Jianle, Shenzhen, Guangdong 518129 (CN); LIU, Bo, Shenzhen, Guangdong 518129 (CN)
(74) Representative: Gill Jennings & Every LLP
(86) International application number: PCT/CN2018/120981
(87) International publication number: WO 2019/196475

(56) References cited:
- WO-A1-2019/185985
- CN-A- 103 227 888
- CN-A- 105 657 432
- CN-A- 105 992 009
- CN-A- 107 197 278
- "PCC Core Experiments for Category 2", 121. MPEG MEETING; 20180122 - 20180126; GWANGJU; (MOTION PICTURE EXPERT GROUP OR ISO/IEC JTC1/SC29/WG11), , no. n17346 23 March 2018 (2018-03-23), XP030023993, Retrieved from the Internet: URL:http://phenix.int-evry.fr/mpeg/doc_end _user/documents/121_Gwangju/wg11/w17346.zi p w17346.docx [retrieved on 2018-03-23]
- DEJUN ZHANG (HUAWEI): "A new patch side information encoding method for PCC TMC2", 121. MPEG MEETING; 20180122 - 20180126; GWANGJU; (MOTION PICTURE EXPERT GROUP OR ISO/IEC JTC1/SC29/WG11), , no. m42195 22 January 2018 (2018-01-22), XP030261133, Retrieved from the Internet: URL:http://phenix.int-evry.fr/mpeg/doc_end _user/documents/121_Gwangju/wg11/m42195-v2 -m42195_rev2.zip m42195_rev2.docx [retrieved on 2018-01-22]
- ZHANG DEJUN (HUAWEI) ET AL: "[PCC] TMC2 Improved Temporally consistent Patch Packing", 122. MPEG MEETING; 20180416 - 20180420; SAN DIEGO; (MOTION PICTURE EXPERT GROUP OR ISO/IEC JTC1/SC29/WG11), , no. m42718 12 April 2018 (2018-04-12), XP030071057, Retrieved from the Internet: URL:http://phenix.int-evry.fr/mpeg/doc_end _user/documents/122_San%20Diego/wg11/m4271 8-v1-m42718_r1.zip m42718_TemporallyConsistentMultiframePatch Paking.docx [retrieved on 2018-04-12]
- ZHANG DEJUN (HUAWEI) ET AL: "[PCC] TMC2 A differential coding method for patch side information", 122. MPEG MEETING; 20180416 - 20180420; SAN DIEGO; (MOTION PICTURE EXPERT GROUP OR ISO/IEC JTC1/SC29/WG11), , no. m42761 14 April 2018 (2018-04-14), XP030071100, Retrieved from the Internet: URL:http://phenix.int-evry.fr/mpeg/doc_end _user/documents/122_San%20Diego/wg11/m4276 1-v1-m42761_r1.zip m42761_DifferentialPatchPackingMethod.docx [retrieved on 2018-04-14]
- "PCC Test Model Category 2 v0", 120. MPEG MEETING; 20171023 - 20171027; MACAU; (MOTION PICTURE EXPERT GROUP OR ISO/IEC JTC1/SC29/WG11), , no. n17248 14 December 2017 (2017-12-14), XP030023909, Retrieved from the Internet: URL:http://phenix.int-evry.fr/mpeg/doc_end _user/documents/120_Macau/wg11/w17248.zip w17248_TMC2v0-v2.docx [retrieved on 2017-12-14]
- LIU, TIANMING et al.: "A Novel Motion Estimation Technique: Patch-Matching", WCC 2000 - ICSP 2000. 2000 5th International Conference on Signal Processing Proceedings. 16th World Computer Congress 2000, August 2000 (2000-08), pages 1096-1099, XP055644722,

## Description

### TECHNICAL FIELD

This application relates to the field of point clouds, and more specifically, to a method and an apparatus for point cloud coding.

### BACKGROUND

In a moving picture experts group (moving picture experts group, MPEG) point cloud coding method, a to-be-encoded point cloud is first segmented into a plurality of point cloud blocks according to a specific rule. Each point cloud block, also referred to as a patch, is a connected region. The patch includes a plurality of 2D images and related auxiliary information that are obtained through 3D-2D projection. The entire point cloud is segmented into several patches, and there is no overlapping region between any two patches. For these patches with different shapes, a method is required for tightly arranging all the patches onto a two-dimensional image according to a specific rule. Such a method for arranging all the patches is referred to as packing. A depth map in a current frame, a texture map in the current frame, and an occupancy map in the current frame are finally obtained by packing all patches according to a packing sequence. Then, the depth map in the current frame, the texture map in the current frame, and the occupancy map in the current frame are encoded.

For a dynamic point cloud, all patches in the current frame are directly packed according to a specific rule (for example, in descending or ascending order) by using a prior-art packing method, to obtain the occupancy map in the current frame. However, temporal and spatial consistency between a patch in a previous frame and the patch in the current frame is not considered in this manner. Consequently, the same patch may have different locations in an occupancy map in the previous frame and the occupancy map in the current frame, and coding efficiency of a video encoder or an image encoder is reduced.

### SUMMARY

Implementations of the present disclosure provide a method for point cloud coding and a related device, to help improve video coding efficiency.

The invention has been defined in the independent claims. Further specific technical features have been defined in the dependent claims.

After global matched patches of the N frames of point clouds (that is, the M global matched patch sets) are obtained, during packing (packing), a global matched patch of each frame of point cloud is preferably packed, and a non-global matched patch is then packed, to obtain an occupancy map of each frame of point cloud of the N frames of point clouds. Because the global matched patches of all the N frames of point clouds are allocated with same or similar locations during packing, the global matched patches in generated occupancy maps in all the frames are spatially consistent. This improves coding efficiency of occupancy maps, depth maps, and texture maps in subsequent coding.

The reference frame of the i^{th} frame of point cloud is one of processed frames of point clouds in the N frames of point clouds before the i^{th} frame of point cloud is processed. If an (i-1)^{th} frame of point cloud is the reference frame of the i^{th} frame of point cloud, a matched patch set of the (i-1)^{th} frame of point cloud is correspondingly the matched patch set of the reference frame of the i^{th} frame of point cloud. If the i^{th} frame of point cloud is a reference frame of an (i+1)^{th} frame of point cloud, the matched patch set of the i^{th} frame of point cloud is correspondingly a matched patch set of the reference frame of the (i+1)^{th} frame of point cloud.

In a process of processing the N frames of point clouds, a point cloud that is first processed is any frame of point cloud in the N frames of point cloud, for example, a 0^{th} frame of point cloud. The i^{th} frame of point cloud is one frame of point cloud in the N frames of point clouds but is not first processed.

It should be noted that, before patches in the patch sets of the N frames of point clouds are processed, a state identifier of each patch in a patch set of each frame of point cloud of the N frames of point clouds is a first identifier (for example, false or 0) and/or a target index of each patch is a default value. During the matching operation, whether a patch is an unmatched patch is determined based on whether a state identifier of the patch is the first identifier or whether a target index of the patch is the default value. In other words, the unmatched patch in the patch set of the i^{th} frame of point cloud is a patch whose state identifier is the first identifier in the patch set of the i^{th} frame of point cloud or a patch whose target index is the default value.

If an i'^{th} global matched patch set is a set of patches that have a matching relationship across Nr frames of point clouds, there are N_{i'} of patches in the i'^{th} global matched patch set, where i' = 0, 1, 2 ..., M-1. M represents a quantity of global matched patch sets, and Ni' is greater than or equal to N1. In other words, that at least one of M global matched patch sets is a set of patches that have a matching relationship across N1 frames of point clouds may be understood as that, the M global matched patch sets include the set of patches that have a matching relationship across the N1 frames of point clouds, and also include a set of patches that have a matching relationship across another quantity of frames of point clouds, where the another quantity of frames herein is greater than or equal to N1.

The set of patches that have a matching relationship across the N1 frames of point clouds may be understood as that, the set includes N1 patches, each of the N1 patches is from (or belongs to) one frame of point cloud, different patches are from different point clouds, and the N1 patches have a matching relationship. The N1 patches are from patch sets of the N1 frames of point clouds. For example, a global matched patch set includes four patches: a patch A, a patch B, a patch C, and a patch D, and the four patches are from patch sets of four frames of point clouds. If there is a matching relationship between the patch A and the patch B, there is a matching relationship between the patch B and the patch C, there is a matching relationship between the patch C and the patch D, or there is a matching relationship between any one of the patch A, the patch B, the patch C, and the patch D and the other three patches, each of the four patches may be referred to as a patch that has a matching relationship across the four frames of point clouds, and the set including the four patches is a set of patches that have a matching relationship across the four frames of point clouds.

A patch set of a frame of point cloud that is first processed is used as a matched patch set of the frame of point cloud.

There are Wi patches in the matched patch set of the i^{th} frame of point cloud, where i = 0, 1, ..., N-1, and P is a minimum value of Wi. The matched patch sets of the N frames of point clouds may be N matched patch sets of the N frames of point clouds, that is, each frame of point cloud corresponds to one matched patch set.

That the w1^{th} patch is an unmatched patch means that the target index of the w1^{th} patch is the default value or a state identifier of the w1^{th} patch is the first identifier. When the t1^{th} patch matches the w1^{th} patch, the target index of the w1^{th} patch is set to the index of the t1^{th} patch (that is, the target index is not the default value) and/or the state identifier of the w1^{th} patch is set to a second identifier (for example, true or 1). The second identifier is used to indicate that the w1^{th} patch is a matched patch. When the w1^{th} patch does not match the t1^{th} patch, a matching operation continues to be performed on a (t1+1)^{th} patch in the patch set of the reference frame and the w1^{th} patch.

It can be learned that, in this technical solution, the global matched patches of the N frames of point clouds are obtained, so that the global matched patches that have a matching relationship across all of the frames of point clouds are allocated with same or similar locations during packing, and further the global matched patches that have a matching relationship across generated occupancy maps of all the frames of point clouds are spatially consistent. In other words, in this technical solution, based on temporal and spatial correlation between different point clouds, spatial consistency between patches that have a matching relationship across different point clouds are considered. An occupancy map of a point cloud can be used to guide generation of a depth map and a texture map of the point cloud, and a technology for encoding the depth map and the texture map of the point cloud is a video-based/image-based coding technology. However, data about differences between frames are transmitted through a bitstream in the video /image coding technology. Therefore, if patches that have a matching relationship across different point clouds are spatial consistent, coding efficiency can be improved, and bitstream transmission overheads are reduced.

### BRIEF DESCRIPTION OF DRAWINGS

To describe the technical solutions in the implementations of the present disclosure more clearly, the following briefly describes the accompanying drawings for describing the implementations or the prior art.
FIG. 1 is a block diagram of an example point cloud coding system that is applicable to an implementation of this application;
FIG. 2 is a schematic block diagram of an example encoder that is applicable to an implementation of this application;
FIG. 3(a) to FIG. 3(c) are schematic diagrams of a point cloud, patches of the point cloud, and an occupancy map of the point cloud that are applicable to an implementation of this application;
FIG. 4 is a schematic block diagram of an example decoder that is applicable to an implementation of this application;
FIG. 5 is a schematic flowchart of a packing method in an MPEG point cloud coding technology;
FIG. 6 is a schematic flowchart of a method for obtaining a global matched patch according to an implementation of this application;
FIG. 7(a) and FIG. 7(b) are schematic diagrams of obtaining a matched patch according to an implementation of this application;
FIG. 8 is a schematic diagram of obtaining a global matched patch according to an implementation of this application;
FIG. 9 is another schematic diagram of obtaining a global matched patch according to an implementation of this application;
FIG. 10 is a schematic flowchart of another method for obtaining a global matched patch according to an implementation of this application;
FIG. 11a is another schematic diagram of obtaining a global matched patch according to an implementation of this application;
FIG. 11b is another schematic diagram of obtaining a global matched patch according to an implementation of this application;
FIG. 12 is a schematic flowchart of another method for obtaining a global matched patch according to an implementation of this application;
FIG. 13 is another schematic diagram of obtaining a global matched patch according to an implementation of this application;
FIG. 14 is another schematic diagram of obtaining a global matched patch according to an implementation of this application;
FIG. 15 is another schematic diagram of obtaining a global matched patch according to an implementation of this application;
FIG. 16 is a schematic structural diagram of an apparatus for obtaining a global matched patch according to an implementation of this application;
FIG. 17 is a schematic structural diagram of another apparatus for obtaining a global matched patch according to an implementation of this application;
FIG. 18 is a schematic structural diagram of another apparatus for obtaining a global matched patch according to an implementation of this application;
FIG. 19 is a schematic structural diagram of another apparatus for obtaining a global matched patch according to an implementation of this application;
FIG. 20 is a schematic structural diagram of another apparatus for obtaining a global matched patch according to an implementation of this application;
FIG. 21 is a schematic structural diagram of an encoding apparatus according to an implementation of this application; and
FIG. 22 is a schematic structural diagram of another encoding apparatus according to an implementation of this application.

### DESCRIPTION OF IMPLEMENTATIONS

To make the objectives, technical solutions, and advantages of this invention clearer, the following further describes various implementations in detail with reference to the accompanying drawings.

The term "at least one (type)" in the implementations of this application includes one (type) or more (types). "A plurality of" means two (types) or more than two (types). For example, at least one of A, B, and C includes the following cases: only A, only B, both A and B, both A and C, both B and C, and both A, B, and C. The term "and/or" in the implementations of this application describes only an association relationship for describing associated objects and represents that three relationships may exist. For example, A and/or B may represent the following three cases: Only A exists, both A and B exist, and only B exists. The character "/" in the implementations of this application generally indicates an "or" relationship between the associated objects. The character "/" in a formula represents a "division" operation. For example, A/B represents A is divided by B. In the implementations of this application, the terms "first", "second", and the like are intended to distinguish between different objects but do not indicate a particular order of the objects.

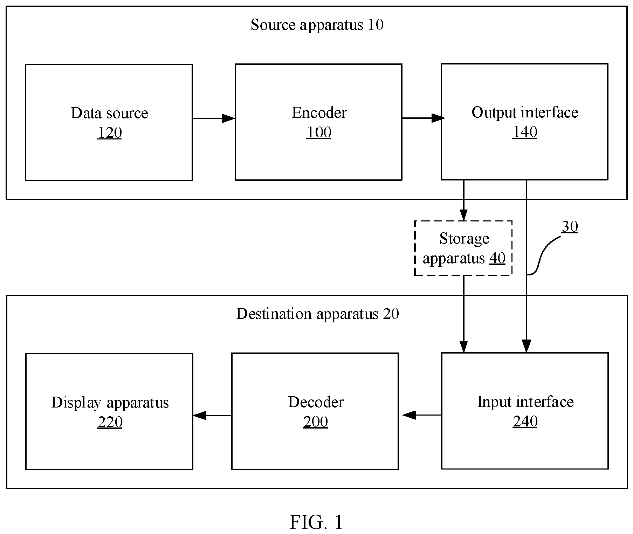

FIG. 1 is a schematic block diagram of an example point cloud coding system 1 that is applicable to an implementation of this application. The term "point cloud coding" or "coding" may generally be point cloud encoding or point cloud decoding. An encoder 100 in the point cloud coding system 1 may encode a to-be-encoded point cloud according to any point cloud coding method provided in this application. A decoder 200 in the point cloud coding system 1 may decode a to-be-decoded point cloud according to a point cloud decoding method, provided in this application, corresponding to a point cloud coding method used by an encoder.

As shown in FIG. 1, the point cloud coding system 1 includes a source apparatus 10 and a destination apparatus 20. The source apparatus 10 generates encoded point cloud data. Therefore, the source apparatus 10 may be referred to as a point cloud encoding apparatus. The destination apparatus 20 may decode the encoded point cloud data generated by the source apparatus 10. Therefore, the destination apparatus 20 may be referred to as a point cloud decoding apparatus. Various implementation solutions of the source apparatus 10, the destination apparatus 20, or both the source apparatus 10 and the destination apparatus 20 may include one or more processors and a memory coupled to the one or more processors. The memory may include but is not limited to a random access memory (random access memory, RAM), a read-only memory (read-only memory, ROM), an electrically erasable programmable read-only memory (electrically erasable programmable read-only memory, EEPROM), a flash memory, or any other medium that can be used to store desired program code in a form of an instruction or a data structure that can be accessed by a computer, as described in this specification.

The source apparatus 10 and the destination apparatus 20 may include various apparatuses, including a desktop computer, a mobile computing apparatus, a notebook (for example, laptop) computer, a tablet computer, a set top box, a handheld telephone set such as a "smart" phone, a television set, a camera, a display apparatus, a digital media player, a video game console, an in-vehicle computer, and similar apparatuses.

The destination apparatus 20 may receive the encoded point cloud data from the source apparatus 10 over a link 30. The link 30 may include one or more media or apparatuses that can move the encoded point cloud data from the source apparatus 10 to the destination apparatus 20. In an example, the link 30 may include one or more communications media that enable the source apparatus 10 to directly send the encoded point cloud data to the destination apparatus 20 in real time. In this example, the source apparatus 10 may modulate the encoded point cloud data according to a communication standard (for example a wireless communication protocol), and may send modulated point cloud data to the destination apparatus 20. The one or more communications media may include a wireless and/or wired communications medium, for example, a radio frequency (radio frequency, RF) spectrum or one or more physical transmission lines. The one or more communications media may constitute a part of a packet-based network, and the packet-based network is, for example, a local area network, a wide area network, or a global network (for example, the internet). The one or more communications media may include a router, a switch, a base station, or another device facilitating communication from the source apparatus 10 to the destination apparatus 20.

In another example, the encoded data may be output to a storage apparatus 40 through an output interface 140. Similarly, the encoded point cloud data may be accessed by an input interface 240 from the storage apparatus 40. The storage apparatus 40 may include any one of a plurality of distributed data storage media or locally accessed data storage media, for example, a hard drive, a Blu-ray, a digital versatile disc (digital versatile disc, DVD), a compact disc read-only memory (compact disc read-only memory, CD-ROM), a flash memory, a volatile or nonvolatile memory, or any other appropriate digital storage medium configured to store the encoded point cloud data.

In another example, the storage apparatus 40 may correspond to a file server or another intermediate storage apparatus that can store the encoded point cloud data generated by the source apparatus 10. The destination apparatus 20 may access the stored point cloud data through streaming transmission or downloading from the storage apparatus 40. The file server may be any type of server that can store the encoded point cloud data and send the encoded point cloud data to the destination apparatus 20. Examples of the file server include a network server (for example, used for a website), a file transfer protocol (file transfer protocol, FTP) server, a network attached storage (network attached storage, NAS) apparatus, or a local disk drive. The destination apparatus 20 may access the encoded point cloud data through any standard data connection (including an internet connection). The standard data connection may include a radio channel (for example, a Wi-Fi connection), a wired connection (for example, a digital subscriber line (digital subscriber line, DSL) or a cable modem), or a combination thereof that is suitable for access of the encoded point cloud data stored in the file server. Transmission of the encoded point cloud data from the storage apparatus 40 may be streaming transmission, downloading transmission, or a combination thereof.

The point cloud coding system 1 described in FIG. 1 is merely an example, and the technologies in this application may be applicable to a point cloud coding (for example, point cloud encoding or point cloud decoding) apparatus that does not necessarily include any data communication between a point cloud encoding apparatus and a point cloud decoding apparatus. In another example, data is retrieved from a local memory, is transmitted on a network in a streaming manner, and the like. The point cloud encoding apparatus may encode the data and store the data to the memory, and/or the point cloud decoding apparatus may retrieve the data from the memory and decode the data. In many examples, apparatuses that only encode data and store the data to the memory and/or retrieve the data from the memory and decode the data and that do not communicate with each other perform encoding and decoding.

In the example in FIG. 1, the source apparatus 10 includes a data source 120, an encoder 100, and an output interface 140. In some examples, the output interface 140 may include a modulator/demodulator (modem) and/or a transmitter. The data source 120 may include a point cloud capture apparatus (for example, a camera), a point cloud archive including previously captured point cloud data, a point cloud feed-in interface configured to receive point cloud data from a point cloud content provider, a computer graphics system configured to generate point cloud data, or a combination of these sources of point cloud data.

The encoder 100 may encode the point cloud data from the data source 120. In some examples, the source apparatus 10 directly sends the encoded point cloud data to the destination apparatus 20 through the output interface 140. In another example, the encoded point cloud data may be alternatively stored to the storage apparatus 40, so that the destination apparatus 20 subsequently accesses the encoded point cloud data for decoding and/or playing.

In the example in FIG. 1, the destination apparatus 20 includes the input interface 240, a decoder 200, and a display apparatus 220. In some examples, the input interface 240 includes a receiver and/or a modem. The input interface 240 may receive the encoded point cloud data over the link 30 and/or from the storage apparatus 40. The display apparatus 220 may be integrated with the destination apparatus 20 or may be located outside the destination apparatus 20. Generally, the display apparatus 220 displays decoded point cloud data. There may be a plurality of types of display apparatuses 220. For example, the display apparatus 220 may be, for example, a liquid crystal display (liquid crystal display, LCD), a plasma display, an organic light-emitting diode (organic light-emitting diode, OLED) display, or another type of display apparatus.

Although not shown in FIG. 1, in some aspects, the encoder 100 and the decoder 200 may be respectively integrated with an audio encoder and an audio decoder, and may include an appropriate multiplexer-demultiplexer (multiplexer-demultiplexer, MUX-DEMUX) unit or other hardware and software, to process encoding of an audio and a video in a combined data stream or separate data streams. In some examples, if appropriate, the MUX-DEMUX unit can comply with an ITU H.223 multiplexer protocol or another protocol such as a user datagram protocol (user datagram protocol, UDP).

The encoder 100 and the decoder 200 each may be implemented, for example, as any one of a plurality of circuits: one or more microprocessors, a digital signal processor (digital signal processor, DSP), an application-specific integrated circuit (application-specific integrated circuit, ASIC), a field-programmable gate array (field-programmable gate array, FPGA), discrete logic, hardware, or any combination thereof. If this application is implemented partially through software, the apparatus may store, in an appropriate non-volatile computer-readable storage medium, an instruction used for the software, and may use one or more processors to execute the instruction in hardware, to implement the technology in this application. Any one of the foregoing content (including hardware, software, a combination of hardware and software, and the like) may be considered as one or more processors. The encoder 100 and the decoder 200 each may be included in one or more encoders or decoders, and the encoder or the decoder may be integrated as a part of a combined encoder/decoder (codec) in a corresponding apparatus.

In this application, the encoder 100 may be generally an apparatus that "signals" or "sends" some information to another apparatus such as the decoder 200. The term "signal" or "send" may generally refer to transmission of a syntax element and/or other data used for decoding compressed point cloud data. The transmission may occur in real time or almost in real time. Alternatively, the communication may occur after a period of time. For example, the communication may occur when a syntax element in an encoded bitstream is stored in a computer-readable storage medium during encoding, and the decoding apparatus may then retrieve the syntax element at any time after the syntax element is stored in the medium.

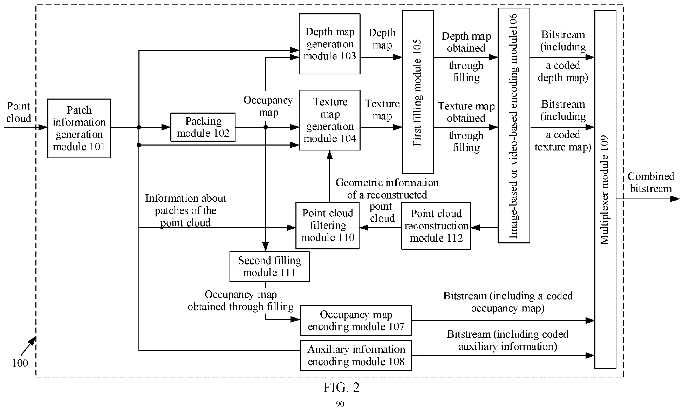

FIG. 2 is a schematic block diagram of an example encoder 100 that is applicable to an implementation of this application. FIG. 2 is described by using an MPEG (moving picture experts group) point cloud compression (point cloud compression, PCC) coding framework as an example. In the example in FIG. 2, the encoder 100 may include a patch information generation module 101, a packing module 102, a depth map generation module 103, a texture map generation module 104, a first filling module 105, an image-based or video-based encoding module 106, an occupancy map encoding module 107, an auxiliary information encoding module 108, a multiplexer module 109, and the like. In addition, the encoder 100 may further include a point cloud filtering module 110, a second filling module 111, a point cloud reconstruction module 112, and the like.

The patch information generation module 101 is configured to segment a frame of point cloud into a plurality of patches by using a method, and obtain related information of the generated patches and the like. The patch is a patch in a set of some points in one frame of point cloud, and generally one connected region corresponds to one patch. The related information of the patch may include but is not limited to at least one of the following information: a quantity of patches obtained by segmenting a point cloud, location information of each patch in a three-dimensional space, an index of a normal coordinate axis of each patch, and a depth map generated when each patch is projected from the three-dimensional space to a two-dimensional space, a size of the depth map of each patch (for example, the width and the height of the depth map), an occupancy map generated when each patch is projected from the three-dimensional space to the two-dimensional space, and the like. Some of the related information such as the quantity of patches segmented from a point cloud, the index of the normal axis of each patch, the size of the depth map of each patch, the location information of each patch in the point cloud, and size information of the occupancy map of each patch may be used as auxiliary information and is sent to the auxiliary information encoding module 108 for encoding (that is, compression encoding). The occupancy map of each patch may be sent to the packing module 102 for packing. Specifically, according to the method for obtaining a global matched patch described in this application, a global matched patch in a point cloud is first obtained; and during packing, a global matched patch of each frame of point cloud is preferably packed, and a non-global matched patch is then packed, to obtain the occupancy map of the point cloud. In addition, information about a specific location of each patch in the occupancy map of the point cloud, the depth map of each patch, and the like may be sent to the depth map generation module 103.

After obtaining the occupancy map of the point cloud, the packing module 102 may perform filling on the occupancy map of the point cloud through the second filling module 111, and then send an occupancy map obtained through filling to the occupancy map encoding module 107 for encoding. In addition, the packing module may use the occupancy map of the point cloud to guide the depth map generation module 103 to generate a depth map of the point cloud and guide the texture map generation module 104 to generate a texture map of the point cloud.

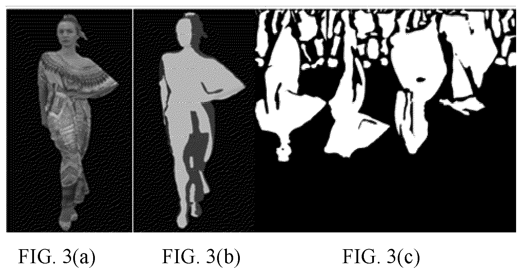

FIG. 3(a) to FIG. 3(c) are schematic diagrams of a point cloud, patches of the point cloud, and an occupancy map of the point cloud that are applicable to an implementation of this application. FIG. 3(a) is a schematic diagram of one frame of point cloud. FIG. 3(b) is a schematic diagram of patches of the point cloud obtained based on FIG. 3(a). FIG. 3(c) is a schematic diagram of an occupancy map, of the point cloud, obtained by packing occupancy maps of the patches obtained by mapping the patches onto a two-dimensional plane.

The depth map generation module 103 is configured to: generate a depth map of the point cloud based on the occupancy map of the point cloud, the occupancy map of each patch of the point cloud, and depth information, and send the generated depth map to the first filling module 105, so that the first filling module 105 performs filling on empty pixels in the depth map, to obtain a depth map obtained through filling.

The texture map generation module 104 is configured to: generate a texture map of the point cloud based on the occupancy map of the point cloud, the occupancy map of each patch of the point cloud, and texture information, and send the generated texture map to the first filling module 105, so that the first filling module 105 performs filling on empty pixels in the texture map, to obtain a texture map obtained through filling.

The first filling module 105 sends the depth map obtained through filling and the texture map obtained through filling to the image-based or video-based encoding module 106, to perform image-based or video-based encoding. Following processing are as follows.

The image-based or video-based encoding module 106, the occupancy map encoding module 107, and the auxiliary information encoding module 108 send obtained encoding results (that is, bitstreams) to the multiplexer module 109, and the multiplexer module 109 combines the bitstreams to constitute one bitstream, where the bitstream may be sent to the output interface 140.

In addition, an encoding result (that is, a bitstream) obtained by the image-based or video-based encoding module 106 is sent to the point cloud reconstruction module 112 to perform point cloud reconstruction, to obtain a reconstructed point cloud (that is, to obtain geometric information of the reconstructed point cloud). Specifically, video decoding is performed on an encoded depth map obtained by the image-based or video-based encoding module 106, to obtain a decoded depth map of the point cloud, and the geometric information of the reconstructed point cloud is obtained by decoding the depth map, the occupancy map of the point cloud, and the auxiliary information of each patch. The geometry information of the point cloud refers to a coordinate value of a point in the point cloud (for example, each point in the point cloud) in the three-dimensional space.

Optionally, the point cloud reconstruction module 112 may further send the texture information of the point cloud and the geometry information of the reconstructed point cloud to a coloring module. The coloring module is configured to color the reconstructed point cloud to obtain texture information of the reconstructed point cloud.

Optionally, the texture map generation module 104 may further generate the texture map of the point cloud based on information obtained through filtering performed by the point cloud filtering module 110 on the geometry information of the reconstructed point cloud.

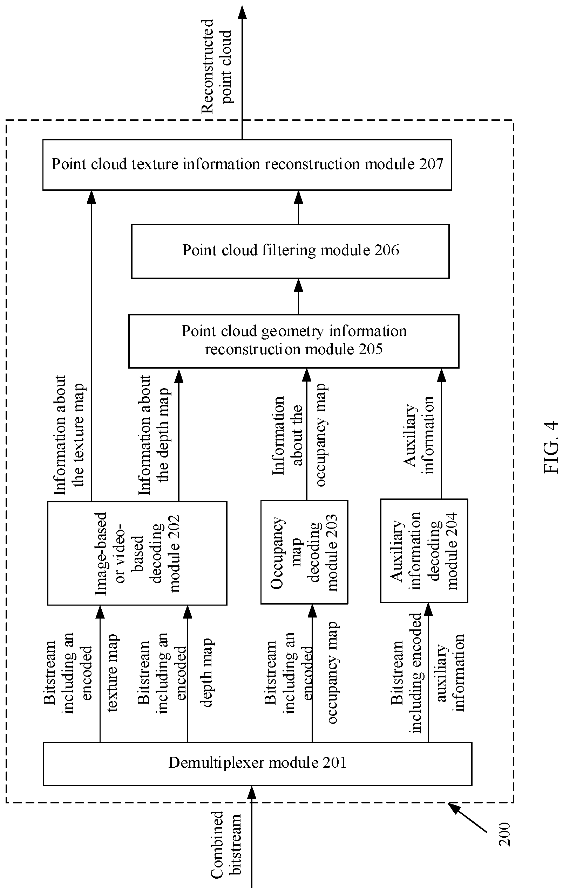

FIG. 4 is a schematic block diagram of an example decoder 200 that is applicable to an implementation of this application. An MPEG PCC decoding framework is used as an example for description in FIG. 4. In the example in FIG. 4, the decoder 200 may include a demultiplexer module 201, an image-based or video-based decoding module 202, an occupancy map decoding module 203, an auxiliary information decoding module 204, a point cloud geometry information reconstruction module 205, a point cloud filtering module 206, and a point cloud texture information reconstruction module 207. Details are as follows:

The demultiplexer module 201 is configured to send an input bitstream (that is, a combined bitstream) to a corresponding decoding module. Specifically, a bitstream including an encoded texture map and an encoded depth map is sent to the image-based or video-based decoding module 202; a bitstream including an encoded occupancy map is sent to the occupancy map decoding module 203; and a bitstream including encoded auxiliary information is sent to the auxiliary information decoding module 204.

The image-based or video-based decoding module 202 is configured to: decode the received encoded texture map and the received encoded depth map, send information about the texture map obtained through decoding to the point cloud texture information reconstruction module 207, and send information about the depth map obtained through decoding to the point cloud geometry information reconstruction module 205. The occupancy map decoding module 203 is configured to: decode the received bitstream including the encoded occupancy map, and send information about the occupancy map obtained through decoding to the point cloud geometry information reconstruction module 205. The auxiliary information decoding module 204 is configured to: decode the received encoded auxiliary information, and send, to the point cloud geometry information reconstruction module 205, information that indicates the auxiliary information and that is obtained through decoding.

The point cloud geometry information reconstruction module 205 is configured to reconstruct the geometry information point cloud based on the received occupancy map information and the received auxiliary information. After filling is performed on the geometry information of the reconstructed point cloud by the point cloud filtering module 206, geometry information of the reconstructed point cloud, obtained through filtering, is sent to the point cloud texture information reconstruction module 207.

The point cloud texture information reconstruction module 207 is configured to reconstruct texture information of the point cloud, to obtain a reconstructed point cloud.

It can be understood that the decoder 200 shown in FIG. 4 is merely an example, and in specific implementation, the decoder 200 may include more or fewer modules than those shown in FIG. 4. This is not limited in the implementations of this application.

For ease of understanding of the technical solutions provided in the implementations of this application, the following describes technologies and terms used in the implementations of this application.

In an MPEG point cloud coding method, an encoder first segments a to-be-encoded point cloud (that is, a current frame or a current frame of point cloud) into several patches according to a specific rule, and these patches do not have an overlapping region. Then, the encoder projects each patch from a three-dimensional space to a two-dimensional plane, to obtain a two-dimensional image (that is, an occupancy map of the patch). Next, the encoder tightly arranges occupancy maps of all the patches (or occupancy maps, of the patches, whose resolution is reduced) onto one two-dimensional image according to a specific rule, to obtain a current frame of occupancy map. Such a method for arranging occupancy maps of patches is referred to as packing (packing). Subsequently, the encoder obtains a current frame of depth map and a current frame of texture map by packing all the patches according to a packing sequence. The current frame of depth map is a two-dimensional image generated by packing depth maps obtained by projecting all the patches in a packing sequence. The current frame of texture map is a two-dimensional image generated by packing texture maps obtained by projecting all the patches in a packing sequence. The current frame of occupancy map is a two-dimensional binary-value image, and is used to indicate whether a location of each pixel of the two-dimensional image is occupied by a point in the point cloud. Generally, to reduce a quantity of bits for coding, resolution of the current frame of occupancy map is lower than resolution of the current frame of depth map and resolution of the current frame of texture map.

The following provides example information and description information of a patch (or referred to as side information of a patch). Details are shown in Table 1.

**Table 1**

| Information about a patch | Description |
|---|---|
| u0 | Coordinate location x of the patch (or an occupancy map of the patch) in the current frame of occupancy map |
| v0 | Coordinate location y of the patch (or the occupancy map of the patch) in the current frame of occupancy map |
| sizeU0 | Width of the patch (or the occupancy map of the patch) in the current frame of occupancy map |
| sizeV0 | Height of the patch (or the occupancy map of the patch) in the current frame of occupancy map |
| occupancyResolution | Resolution of the current frame of occupancy map, for example, 16 |
| sizeU | Width of the occupancy map of the patch |
| sizeV | Height of the occupancy map of the patch |
| Occupancy | Occupancy map of the patch |
| patchIndex | Index of the patch |
| bestMatchedIndex | Index of a patch, of a reference frame, that matches the patch |
| preBestMatchIndex | Index of a patch, of a previous frame, that matches the patch |
| nextBestMatchIndex | Index of a patch, of a next frame, that matches the patch |

Coordinates of the patch (or the occupancy map of the patch) in the current frame of occupancy map may be represented as (x, y), where x represents a minimum coordinate value of each point of the occupancy map of the patch on the X axis, y represents a minimum coordinate value of each point of the occupancy map of the patch on the Y axis. Certainly, the implementations of this application is not limited thereto. A coordinate system of the current frame of occupancy map is an X-Y coordinate system, the X-axis represents a coordinate axis in the horizontal direction, and the Y-axis is a coordinate axis in the vertical direction.

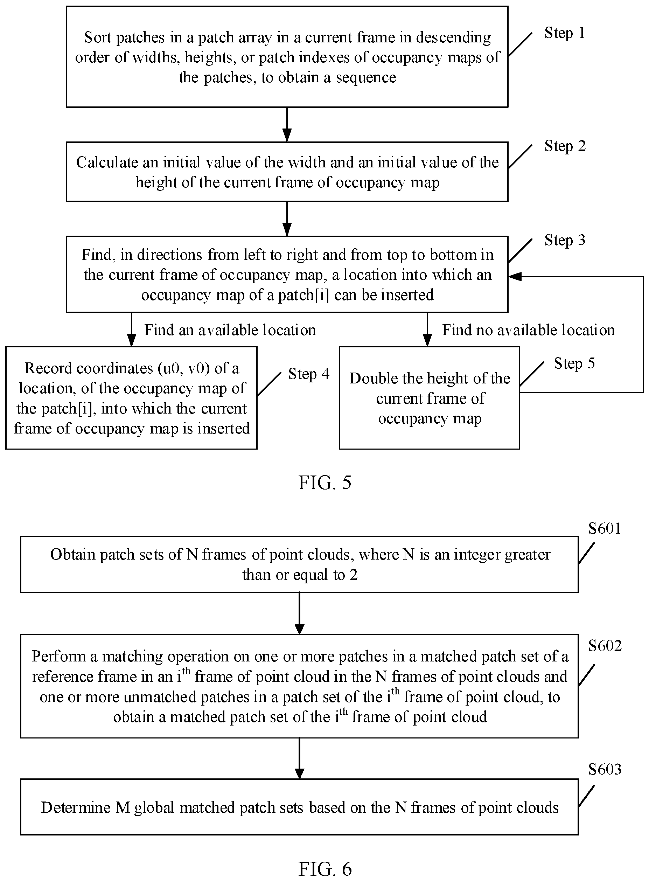

FIG. 5 is a schematic flowchart of a packing method in an MPEG point cloud coding technology. The method shown in FIG. 5 may be performed by a packing module in an encoder. In the method shown in FIG. 5, it is assumed that the encoder segments a current frame into a quantity patchCount of patches, and these patches are usually stored in a form of a patch set. The method shown in FIG. 5 includes the following steps.

Step 1: Sort patches in the patch set in the current frame in descending order of widths (sizeU), heights (sizeV), or patch indexes (patchIndex) of occupancy maps of the patches, to obtain a sequence. In the following, an i^{th} patch in the set in the sequence is denoted as a patch[i], where i = 0, 1, ..., patchCount-1.

Step 2: Calculate an initial value of the width and an initial value of the height of the current frame of occupancy map

For example, the initial value of the width of the occupancy map in the current frame is obtained according to max{minimumImageWidth/occupancyResolution, patch[0].sizeU0}. minimumImageWidth represents a minimum value of the width of the current frame of occupancy map, and patch[0].sizeU0 represents the width of an occupancy map of apatch[0].

The initial value of the height of the current frame of occupancy map is obtained according to the formula max{minimumImageHeight/occupancyResolution, patch[0].sizeV0}. minimumImageHeight represents a minimum value of the height of the current frame of occupancy map, and patch[0].sizeV0 indicates the height of the current frame of occupancy map of the patch[0].

Step 3: Find, in directions from left to right and from top to bottom in the current frame of occupancy map, a location into which an occupancy map of the patch[i] can be inserted. The current frame of occupancy map is already inserted into the location occupied by the occupancy map of the patch, and an occupancy map of another patch cannot be inserted into. It can be understood that, the occupancy map of the patch[i] in step 3 may be replaced with an occupancy map, of the patch[i], whose resolution is reduced.

If an available location of the occupancy map of the patch[i] is found, step 4 is performed.

If no available location of the occupancy map of the patch[i] is found in the current frame of occupancy map, step 5 is performed.

Step 4: Record coordinates (u0, v0) of a location, of the occupancy map of the patch[i], into which the current frame of occupancy map is inserted.

After step 4 is performed, the process ends.

Step 5: Double the height occupancySizeV of the current frame of occupancy map, and continue to perform step 3 based on an updated (that is, doubled) height of the current frame of occupancy map.

It can be understood that, each patch set of the current frame is traversed, and step 3 is performed, to obtain a final occupancy map in the current frame.

It can be understood that, a packing process may be considered as a process of updating the occupancy map in the current frame. Unless otherwise specified, the occupancy map in the current frame described in the following refers to the final occupancy map in the current frame. After the packing operation is performed, location information of all the patches in the current frame in the occupancy depth of the current frame can be determined.

Subsequently, video-based/image-based encoding is performed on the depth map in the current frame and the texture image of the current frame based on the location information.

In the packing method shown in FIG. 5, occupation maps of all patches are directly packed after the patches are sorted in descending order. This is easy to implement. However, an occupancy map of one patch may have different locations in an occupancy map in a current frame and an occupancy map in a previous frame. This greatly degrades coding performance of a video-based/image-based coding module, and more bits are required for coding side information of a patch.

Therefore, the implementations of this application provide a method and apparatus for obtaining a global matched patch of a point cloud, and an encoding apparatus. Optionally, the point cloud in the implementations of this application is a dynamic point cloud, and there is temporal and spatial correlation between a current frame of point cloud and a previous frame of point cloud. The correlation may be specifically that there is a global matched patch in a point cloud group.

Before the implementations of this application are described in detail, it should be noted that, in a patch processing process in the implementations of this application, information stored in a global matched patch set, a candidate global matched patch set, a matched patch set, and a patch set may be patch information. The patch information may include some or all of a patch, an index of the patch, an index of a frame to which the patch belongs, and auxiliary information of the patch. However, this is not limited thereto, and the patch information may be another representation form of the patch. In the implementations of this application, that the patch information is a patch is mainly used as an example for description.

In this application, before patches in patch sets of N frames of point clouds are processed, a state identifier of each patch in a patch set of each frame of point cloud of the N frames of point clouds is a first identifier (for example, false or 0) and/or a target index of each patch is a default value. Before a matching operation is performed, whether a patch is an unmatched patch is determined based on whether a state identifier of the patch is the first identifier or whether a target index of the patch is the default value.

For the N frames of point clouds, at least one of M global matched patch sets is a set of patches that have a matching relationship across N1 frames of point clouds and the N1 frames of point clouds are all or some frames in the N frames of point clouds. If an i'^{th} global matched patch set is a set of patches that have a matching relationship across N_{i'} frames of point clouds, there are N_{i'} of patches in the i'^{th} global matched patch set, where i' = 0, 1, 2 ..., M-1. M represents a quantity of global matched patch sets, and Ni' is greater than or equal to N1.

That at least one of M global matched patch sets is a set of patches that have a matching relationship across N1 frames of point clouds and the N1 frames of point clouds are all or some frames in the N frames of point clouds may be understood as that, the M global matched patch sets include the set of patches that have a matching relationship across the N1 frames of point clouds, and also include a set of patches that have a matching relationship across another quantity of frames of point clouds, where the another quantity of frames herein is greater than or equal to N1. For example, N = 4, the M global matched patch sets include sets of patches that have a matching relationship across four frames of point clouds, may further include sets of patches that have a matching relationship across three of the four frames of point clouds, and may further include sets of patches that have a matching relationship across two of the four frames of point clouds, and sN1 = 2.

The set of patches that have a matching relationship across the N1 frames of point clouds may be understood as that, the set includes N1 patches, each of the N1 patches is from (or belongs to) one frame of point cloud, different patches are from different point clouds, and the N1 patches have a matching relationship. The N1 patches are from patch sets of the N1 frames of point clouds. For example, there are four patches: a patch A, a patch B, a patch C, and a patch D, and the four patches are from patch sets of four frames of point clouds. If there is a matching relationship between the patch A and the patch B, there is a matching relationship between the patch B and the patch C, there is a matching relationship between the patch C and the patch D, or there is a matching relationship between any one of the patch A, the patch B, the patch C, and the patch D and the other three patches, each of the four patches may be referred to as a patch that has a matching relationship across the four frames of point clouds, and the set including the four patches is a set of patches that have a matching relationship across the four frames of point clouds. The matching relationship between the patch A and the patch B and the matching relationship between the patch C and the patch D are not limited to the foregoing two manners.

It can be understood that, the feature that a set of patches that have a matching relationship across N1 frames of point clouds not only describes a feature that one global matched patch set includes N1 global matched patches, but also describes a concept of a global matched patch. In other words, a global matched patch in one frame of point cloud is a patch, in this frame of point cloud, that has a matching relationship in each frame of point cloud other than this frame of point cloud in the N1 frames of point clouds.

In the N frames of point clouds, the global matched patch is a patch that has a matching relationship across the N frames of point clouds. For example, it is assumed that N = 4, that is, there are four frames of point clouds (denoted as a point cloud 1 to a point cloud 4). For any patch in the point cloud 1, if there is a patch in patch sets, of the point cloud 2 to the point cloud 4, that has a matching relationship with the patch, for example, if there are patches that have a matching relationship with a patch 11 in the point cloud 1: a patch 21 in the point cloud 2, a patch 31 in the point cloud 3, and a patch 41 in the point cloud 4, the patches 11, 21, 31, and 41 are all global matched patches. A patch q1 is a global matched patch in a point cloud q, where 1 ≤ q ≤ 4, and q is an integer.

A matched patch in a point cloud is a patch in a patch set of the point cloud, and the patch has a matching relationship with a patch in a patch set of a reference frame of the point cloud. An element in the matched patch set of the point cloud is a matched patch in the point cloud.

A state identifier of a patch is used to indicate whether the patch is a matched patch. When the state identifier of the patch is a first identifier, the patch is an unmatched patch, and the patch participates in a subsequent matching process. When the state identifier of the patch is a second identifier, the patch is a matched patch, and the patch does not participate in a subsequent matching process.

The following describes, with reference to the accompanying drawings, a method for obtaining a global matched patch and a related device that are provided in the implementations of this application.

FIG. 6 is a schematic flowchart of a method for obtaining a global matched patch according to an implementation of this application. As shown in FIG. 6, the method includes the following steps.

S601: Obtain patch sets of N frames of point clouds, where N is an integer greater than or equal to 2.

Optionally, the N frames of point clouds may be a group of frames (group of frame, GOF), or the N frames of point clouds are N consecutive frames of point clouds in one GOF. Certainly, this is not limited in this implementation of this application.

S602: Perform a matching operation on one or more patches in a matched patch set of a reference frame of an i^{th} frame of point cloud (also referred to as a current frame of point cloud) in the N frames of point clouds and one or more unmatched patches in a patch set of the i^{th} frame of point cloud, to obtain a matched patch set of the i^{th} frame of point cloud.

The matched patch set of the i^{th} frame of point cloud includes n patches. There is a matching relationship between one of the n patches and a patch in the matched patch set of the reference frame of the i^{th} frame of point cloud. n is an integer greater than or equal to 0. The i^{th} frame of point cloud is one frame of point cloud that is not first processed in the N frames of point clouds.

The reference frame of the i^{th} frame of point cloud is one of processed frames of point clouds in the N frames of point clouds before the i^{th} frame of point cloud is processed. If an (i-1)^{th} frame of point cloud is the reference frame of the i^{th} frame of point cloud, a matched patch set of the (i-1)^{th} frame of point cloud is correspondingly the matched patch set of the reference frame of the i^{th} frame of point cloud. If the i^{th} frame of point cloud is a reference frame of an (i+1)^{th} frame of point cloud, the matched patch set of the i^{th} frame of point cloud is correspondingly a matched patch set of the reference frame of the (i+1)^{th} frame of point cloud.

In a process of processing the N frames of point clouds, a point cloud that is first processed is any frame of point cloud in the N frames of point cloud, for example, a 0^{th} frame of point cloud. The i^{th} frame of point cloud is one frame of point cloud in the N frames of point clouds but is not first processed.

A patch set of a frame of point cloud that is first processed is used as a matched patch set of the frame of point cloud.

It should be noted that, before a matching operation is performed on a patch in a patch set of the N frames of point clouds, a state identifier of each patch in a patch set of each frame of point cloud of the N frames of point clouds is a first identifier (for example, false or 0) and/or a target index of each patch is a default value. During the matching operation, whether a patch is an unmatched patch is determined based on whether a state identifier of the patch is the first identifier or whether a target index of the patch is the default value. In other words, the unmatched patch in the patch set of the i^{th} frame of point cloud is a patch whose state identifier is the first identifier in the patch set of the i^{th} frame of point cloud or a patch whose target index is the default value. The target index is bestMatchedIndex in Table 1.

Specifically, the performing a matching operation on one or more patches in a matched patch set of a reference frame of an i^{th} frame of point cloud in the N frames of point clouds and one or more unmatched patches in a patch set of the i^{th} frame of point cloud, to obtain a matched patch set of the i^{th} frame of point cloud includes:
traversing the matched patch set of the reference frame of the i^{th} frame of point cloud, and performing a matching operation on a t1^{th} patch in the matched patch set of the reference frame and a w1^{th} patch in the patch set of the i^{th} frame of point cloud; and when the t1^{th} patch matches the w1^{th} patch, storing the w1^{th} patch in the matched patch set of the i^{th} frame of point cloud, where a target index of the w1^{th} patch is an index of the t1^{th} patch, and the w1^{th} patch is an unmatched patch in the patch set of the i^{th} frame of point cloud. The index of the t1^{th} patch is a location index of the t1^{th} patch in the patch set of the i^{th} frame of point cloud, that is, the location index is t1.

That the w1^{th} patch is an unmatched patch means that the target index of the w1^{th} patch is the default value or a state identifier of the w1^{th} patch is the first identifier. When the w1^{th} patch matches the t1^{th} patch, the target index of the w1^{th} patch is set to the index of the t1^{th} patch (that is, the target index is not the default value) and/or the state identifier of the w1^{th} patch is set to a second identifier (for example, true or 1). The second identifier is used to indicate that the w1^{th} patch is a matched patch. When the w1^{th} patch does not match the t1^{th} patch, a matching operation continues to be performed on a (t1+1)^{th} patch in the patch set of the reference frame and the w1^{th} patch.

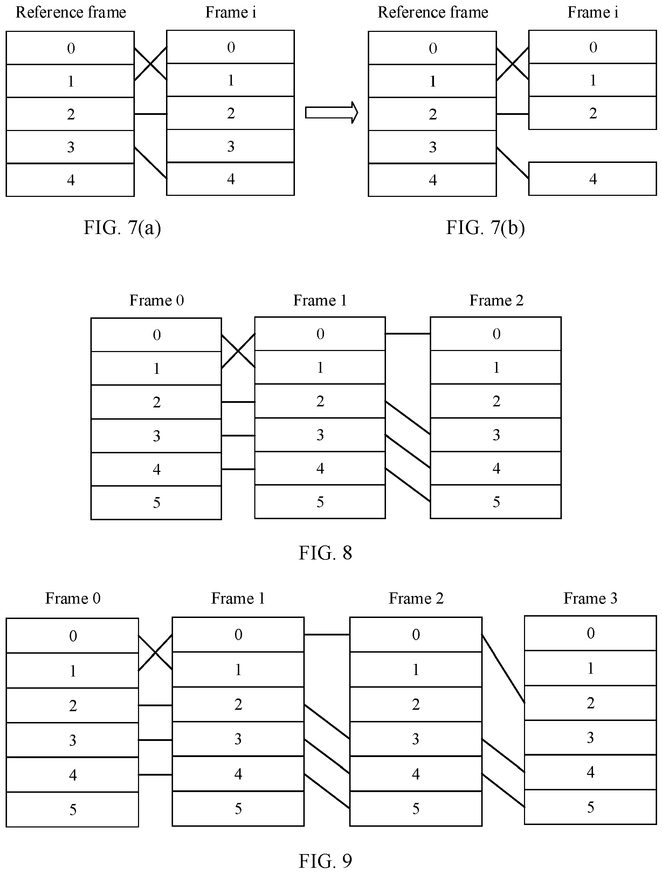

For example, as shown in FIG. 7(a), it is assumed that the matched patch set of the reference frame of the i^{th} frame of point cloud includes five patches, and there are five unmatched patches in the patch set of the i^{th} frame of point cloud: a patch 0, a patch 1, a patch 2, a patch 3, and a patch 4 in the patch set of the i^{th} frame of point cloud. A state identifier of each of five patches in the patch set of the i^{th} frame of point cloud is set to the first identifier (false or 0) and/or a target index of each patch is set to the default value. The matched patch set of the reference frame is traversed, and a matching operation is performed on a patch 0 and an unmatched patch in the patch set of the i^{th} frame of point cloud. When it is determined that the patch 0 in the matched patch set of the reference frame matches the patch 1 in the patch set of the i^{th} frame of point cloud, the patch 1 in the patch set of the i^{th} frame of point cloud is stored in a matched patch set of the i^{th} frame of point cloud, and a state identifier of the patch 1 in the patch set of the i^{th} frame of point cloud is set to the second identifier (for example, true or 1) and/or a target index of the patch 1 is set to an index (for example, 0) of the patch 0 in the matched patch set of the reference frame. Then, a matching operation is performed on a patch 1 in the matched patch set of the reference frame and each unmatched patch (including the patch 0, the patch 2, the patch 3, and the patch 4) in the patch set of the i^{th} frame of point cloud. When it is determined that the patch 1 in the matched patch set of the reference frame matches the patch 0 in the patch set of the i^{th} frame of point cloud, the patch 0 in the patch set of the i^{th} frame of point cloud is stored in the matched patch set of the i^{th} frame of point cloud, and a state identifier of the patch 0 in the patch set of the i^{th} frame of point cloud is set to the second identifier and/or a target index of the patch 0 is set to an index (for example, 1) of a patch 1 in the matched patch set of the reference frame. By that analogy, it is determined that a patch 2 and a patch 3 in the matched patch set of the reference frame respectively matches the patch 2 and the patch 4 in the patch set of the i^{th} frame of point cloud, and the patch 3 in the patch set of the i^{th} frame of point cloud does not match any patch in the matched patch set of the reference frame. The patch 2 and the patch 4 in the patch set of the i^{th} frame of point cloud are stored in the matched patch set of the i^{th} frame of point cloud. A state identifier of the patch 2 in the patch set of the i^{th} frame of point cloud is set to the second identifier and/or a target index of the patch 2 is set to an index (for example, 2) of the patch 2 in the matched patch set of the reference frame, and a state identifier of the patch 4 in the patch set of the i^{th} frame of point cloud is set to the second identifier and/or a target index of the patch 4 is set to an index (for example, 3) of the patch 3 in the matched patch set of the reference frame. In this case, the matched patch set of the i^{th} frame of point cloud includes: the patch 0, the patch 1, the patch 2, and the patch 4, as shown in FIG. 7(b).

S603: Determine M global matched patch sets based on the N frames of point clouds.

At least one of the M global matched patch sets is a set of patches that have a matching relationship across N1 frames of point clouds, M is an integer greater than 0, and the N1 frames of point clouds are all or some frames of point clouds in the N frames of point clouds.

In a possible implementation, M is less than or equal to P, and P represents a quantity of patches in a matched patch set that includes a minimum quantity of matched patches in N matched patch sets. Matched patch sets of the N frames of point clouds may be N matched patch sets of the N frames of point clouds, that is, each frame of point cloud corresponds to one matched patch set.

It should be noted that, for a current frame, a matched patch set of the reference frame of the current frame is searched for a patch that matches a patch in a patch set of the current frame. Therefore, a quantity of patches in a matched patch set of each frame of point cloud in the N frames of point cloud sequentially decreases in a processing order. A patch in a matched patch set of a point cloud in the N frames of point clouds that is last performed is a global matched patch. Next, only a non-global matched patch in a matched patch set of the other frames of point clouds needs to be deleted, and a global matched patch set can be obtained.

Specifically, the obtaining M global matched patch sets based on the matched patch sets of the N frames of point clouds includes: traversing the matched patch set of the reference frame of the i^{th} frame of point cloud, and determining whether the index of the t1^{th} patch is the same as the target index of the w1^{th} patch, where i = {N-1, N-2, ..., 1};
when the index of the t1^{th} patch is different from any of target indexes of all patches in the matched patch set of the i^{th} frame of point cloud, deleting the t1^{th} patch from the matched patch set of the reference frame;
when the index of the t1^{th} patch is the same as a target index of one patch in the matched patch set of the i^{th} frame of point cloud, skipping performing processing on the t1^{th} patch; and
when i is equal to 1, obtaining the M global matched patch sets, where an m^{th} set in the M global matched patch sets includes an m^{th} processed patch in each of matched patch sets in a 0^{th} frame to an (N-2)^{th} frame and an m^{th} processed patch in a matched patch set of an (N-1)^{th} frame.

It should be noted that, a patch in a matched patch set of the (N-1)^{th} frame of point cloud is a global matched patch. Starting from the matched patch set of the reference frame of the (N-1)^{th} frame of point cloud, filtering is performed on a non-global matched patch in the matched patch sets of the 0^{th} frame of point cloud to the (N-2)^{th} frame of point cloud. When i is equal to 1, filtering performed on the non-global matched patch in the matched patch sets of the 0^{th} frame of point cloud to the (N-2)^{th} frame of point cloud completes, and all patches in the matched patch sets of the 0^{th} frame of point cloud to the (N-2)^{th} frame of point cloud are global matched patches. In this case, patches in the matched patch set of each frame of point cloud of the N frames of point clouds are global matched patches, and the matched patch sets of all the frames of point clouds include a same quantity of patches. An m^{th} patch in a matched patch set of an i1^{th} frame of point cloud in the N frames of point clouds matches an m^{th} patch in a matched patch set of an i2^{th} frame of point cloud, the i1^{th} frame of point cloud and the i2^{th} frame of point cloud are point clouds in the N frames of point clouds, and the i1^{th} frame of point cloud and the i2^{th} frame of point cloud are successively processed. Therefore, an m^{th} patch in a matched patch set of each frame of point cloud of the N frames of point clouds is stored in a global matched patch set, where m = 1, 2, ..., M, and M represents a quantity of patches in a matched patch set of any frame of point cloud in the N frames of point clouds. In this case, the M global matched patch sets may be obtained, each global matched patch set includes N patches, and the N patches are from the N frames of point clouds.

In a specific implementation, as shown in FIG. 8, it is assumed that N = 3, that is, there are three frames of point clouds, and a patch set of each frame of point cloud includes six patches. It is further assumed that, a 0^{th} frame of point cloud is a point cloud that is first processed in the three frames of point clouds, and all patches in a patch set of the 0^{th} frame of point cloud are stored in a matched patch set of the 0^{th} frame of point cloud.

It should be noted herein that a patch[z] in a patch set of the i^{th} frame of point cloud indicates a z^{th} patch in the patch set of the i^{th} frame of point cloud. Before the three frames of point clouds are processed, a state identifier of each patch in a patch set of each frame of point cloud of the three frames of point clouds is a first identifier (for example, false or 0) and/or a target index of each patch is a default value.

When a patch set of a first frame of point cloud is processed, the 0^{th} frame of point cloud is used as a reference frame of the first frame of point cloud. The matched patch set of the 0^{th} frame of point cloud is traversed, and a matching operation is performed on a patch[0] in the matched patch set of the 0^{th} frame of point cloud and an unmatched patch in the patch set of the first frame of point cloud. It is determined that the patch[0] in the matched patch set of the 0^{th} frame of point cloud matches a patch[1] in the patch set of the first frame of point cloud, the patch[1] in the patch set of the first frame of point cloud is stored in a matched patch set of the first frame of point cloud, and a state identifier of the patch[1] in the patch set of the first frame of point cloud is set to the second identifier (for example, true or 1) and/or a target index of the patch[1] in the patch set of the first frame of point cloud is set to an index (for example, 0) of the patch[0] in the matched patch set of the 0^{th} frame of point cloud. Then, a matching operation is performed on a patch[1] in the matched patch set of the 0^{th} frame of point cloud and an unmatched patch in the patch set of the first frame of point cloud. It is determined that the patch[1] in the matched patch set of the 0^{th} frame of point cloud matches a patch[0] in the patch set of the first frame of point cloud, and the patch[0] in the patch set of the first frame of point cloud is stored in the matched patch set of the first frame of point cloud. A state identifier of the patch[1] in the patch set of the first frame of point cloud is set to the second identifier (for example, true or 1) and/or a target index of the patch[1] in the patch set of the first frame of point cloud is set to an index (for example, 0) of the patch[0] in the matched patch set of the 0^{th} frame of point cloud. By that analogy, after the matched patch set of the 0^{th} frame of point cloud is traversed, it is further determined that a patch[2], a patch[3], and a patch[4] in the matched patch set of the 0^{th} frame of point cloud respectively match a patch[2], a patch[3], and a patch[4] in the patch set of the first frame of point cloud. All patches in the matched patch set of the 0^{th} frame of point cloud do not match a patch[5] in a matched patch set of the first frame of point cloud. The patch[2], the patch[3], and the patch[4] in the patch set of the first frame of point cloud are stored in the matched patch set of the first frame of point cloud. A state identifier of the patch[2] in the patch set of the first frame of point cloud is set to the second identifier (for example, true or 1) and/or a target index of the patch[2] in the patch set of the first frame of point cloud is set to an index (for example, 2) of the patch[2] in the matched patch set of the 0^{th} frame. A state identifier of the patch[3] in the patch set of the first frame of point cloud is set to the second identifier (for example, true or 1) and/or a target index of the patch[3] in the patch set of the first frame of point cloud is set to an index (for example, 3) of the patch[3] in the matched patch set of the 0^{th} frame. A state identifier of the patch[4] in the patch set of the first frame of point cloud is set to the second identifier (for example, true or 1) and/or a target index of the patch[4] in the patch set of the first frame of point cloud is set to an index (for example, 4) of the patch[4] in the matched patch set of the 0^{th} frame. In this case, the matched patch set of the first frame of point cloud includes five patches: the patch[0], the patch[1], the patch[2], the patch[3], and the patch[4].

When a patch set of a second frame of point cloud is processed, the first frame of point cloud is used as a reference frame of the second frame of point cloud. The matched patch set of the first frame of point cloud is traversed, and a matching operation is performed on the patch[0] in the matched patch set of the first frame of point cloud and each patch in a patch set of the second frame of point cloud. It is determined that the patch[0] in the matched patch set of the first frame of point cloud matches a patch[0] in the patch set of the second frame of point cloud, the patch[0] in the patch set of the second frame of point cloud is stored in a matched patch set of the second frame of point cloud, and a state identifier of the patch[0] in the patch set of the second frame of point cloud is set to the second identifier (for example, true or 1) and/or a target index of the patch[0] in the patch set of the second frame of point cloud is set to an index (for example, 0) of the patch[0] in the matched patch set of the first frame of point cloud. Then, a matching operation is performed on the patch[1] in the matched patch set of the first frame of point cloud and an unmatched patch in the patch set of the second frame of point cloud, and it is determined that the patch[1] in the matched patch set of the first frame of point cloud does not match any unmatched patch in the patch set of the second frame of point cloud. A matching operation continues to be performed on the patch[2] in the matched patch set of the first frame of point cloud and an unmatched patch in the patch set of the second frame of point cloud, and it is determined that the patch[2] in the matched patch set of the first frame of point cloud matches a patch[3] in the patch set of the second frame of point cloud. The patch[3] in the patch set of the second frame of point cloud is stored in the matched patch set of the second frame of point cloud, and a state identifier of the patch[3] in the patch set of the second frame of point cloud is set to the second identifier (for example, true or 1) and/or a target index of the patch[3] in the patch set of the second frame of point cloud is set to an index (for example, 2) of the patch[2] in the matched patch set of the first frame of point cloud. By that analogy, after the matched patch set of the first frame of point cloud is traversed, it is further determined that the patch[3] and the patch[4] in the matched patch set of the first frame of point cloud respectively match a patch[4] and a patch[5] in the second frame of point cloud, and the patch[4] and the patch[5] in the patch set of the second frame of point cloud are stored in the matched patch set of the second frame of point cloud. A state identifier of the patch[4] in the patch set of the second frame of point cloud is set to the second identifier (for example, true or 1) and/or a target index of the patch[4] in the patch set of the second frame of point cloud is set to an index (for example, 2) of the patch[3] in the matched patch set of the first frame of point cloud. A state identifier of the patch[5] in the patch set of the second frame of point cloud is set to the second identifier (for example, true or 1) and/or a target index of the patch[5] in the patch set of the second frame of point cloud is set to an index (for example, 4) of the patch[4] in the matched patch set of the first frame of point cloud. In this case, the matched patch set of the second frame of point cloud includes four patches: the patch[0], the patch[3], the patch[4], and the patch[5].

The matched patch set of the 0^{th} frame of point cloud is: matchPatch[0], including the patch[0], the patch[1], the patch[2], the patch[3], the patch[4], and the patch[5].

The matched patch set of the 1^{st} frame is: matchPatch[1], including the patch[0], the patch[1], the patch[2], the patch[3], and the patch[4].

The matched patch set of the 2^{nd} frame is: matchPatch[2], including the patch[0], the patch[3], the patch[4], and the patch[5].

Filtering is performed on the patches in the matched patch sets of the three frames of point clouds in a reverse order of the processing order. It should be noted that, each patch in the matched patch set of the second frame of point cloud is a global matched patch.

The matched patch set of the first frame of point cloud is traversed, and the matched patch set of the first frame of point cloud is searched for a patch that matches a patch in the matched patch set of the second frame of point cloud. A specific method is as follows: determining whether an index of each patch in the matched patch set of the first frame of point cloud is the same as a target index of a patch in the matched patch set of the second frame of point cloud. Indexes of the patch [0], the patch [1], the patch [2], the patch [3], and the patch [4] in the matched patch set of the first frame of point cloud are 0, 1, 2, 3, and 4. Target indexes of the patch[0], the patch[3], the patch[4], and the patch[5] in the matched patch set of the second frame of point cloud are 0, 2, 3, and 4. After the matched patch set of the first frame of point cloud is traversed, it is determined that the index (that is, 1) of the patch [1] in the matched patch set of the first frame of point cloud is different from any one of the target indexes of the patches in the matched patch set of the second frame of point cloud. Therefore, the patch[0] is deleted from the matched patch set of the first frame of point cloud. In this case, the matched patch set of the first frame of point cloud includes the patch[0], the patch[2], the patch[3], and the patch[4], which are all global matched patches.

The matched patch set of the 0^{th} frame of point cloud is traversed, and the matched patch set of the 0^{th} frame of point cloud is searched for a patch that matches a match in the matched patch set of the first frame of point cloud. A specific method is as follows: determining whether an index of each patch in the matched patch set of the 0^{th} frame of point cloud is the same as a target index of a patch in the matched patch set of the first frame of point cloud. Indexes of the patch [0], the patch [1], the patch [2], the patch [3], the patch [4], and the patch [5] in the matched patch set of the 0^{th} frame of point cloud are respectively 0, 1, 2, 3, 4, and 5. Target indexes of the patch[0], the patch[2], the patch[3], and the patch[4] in the matched patch set of the first frame of point cloud are 1, 2, 3, and 4. After the matched patch set of the 0^{th} frame of point cloud is traversed, it is determined that the index (that is, 0) of the patch [0] and the index (that is, 5) of the patch[5] in the matched patch set of the 0^{th} frame of point cloud are different from all the target indexes of the patches in the matched patch set of the first frame of point cloud. Therefore, the patch[0] and the patch[5] are deleted from the matched patch set of the 0^{th} frame of point cloud. In this case, the matched patch set of the 0^{th} frame of point cloud includes the patch[1], the patch[2], the patch[3], and the patch[4], which are all global matched patches.

After non-global matched patches in the matched patch sets of the three frames of point clouds are filtered out, patches in the matched patch sets of the three frames of point clouds are as follows:
the matched patch set of the 0^{th} frame of point clouds is: matchPatch[0], including the patch[1], the patch[2], the patch[3], and the patch[4];
the matched patch set of the 1^{st} frame of point clouds is: matchPatch[1], including the patch[0], the patch[2], the patch[3], and the patch[4]; and
the matched patch set of the 2^{nd} frame of point clouds is: matchPatch[2], including the patch[0], the patch[3], the patch[4], and the patch[5].

Global matched patch sets obtained based on the matched patch set of the three frames of point clouds are as follows:
global matched patch set 0: frame[0].patch[1], frame[1].patch[0], and frame[2].patch[0];
global matched patch set 1: frame[0].patch[2], frame[1].patch[2], and frame[2].patch[3];
global matched patch set 2: frame[0].patch[3], frame[1].patch[3], and frame[2].patch[4]; and
global matched patch set 3: frame[0].patch[4], frame[1].patch[4], and frame[2].patch[5].

frame [i].patch[z] indicates a z^{th} patch in a patch set of an i^{th} frame of point cloud. An m^{th} global matched patch set in the four global matched patch sets includes an m^{th} patch in the matched patch set of each frame of point cloud in the three frames of point clouds.

It can be learned that, according to the solution in the implementations of this application, after global matched patches of the N frames of point clouds are obtained, during packing (packing), a global matched patch in each frame of point cloud is preferably packed, and a non-global matched patch is then packed, to obtain an occupancy map of each frame of point cloud of the N frames of point clouds. Because the global matched patches of all the N frames of point clouds are allocated with same or similar locations during packing, the global matched patches in generated occupancy maps in all the frames are spatially consistent. This improves coding efficiency of occupancy maps, depth maps, and texture maps in subsequent coding.

In another implementation, this implementation of this application provides another method for obtaining a global matched patch, including:
obtaining patch sets of N frames of point clouds, where N is an integer greater than or equal to 2; performing a matching operation on a t2^{th} patch in a matched patch set of a reference frame of a j^{th} frame of point cloud in the N frames of point clouds and a w2^{th} patch in a patch set of the j^{th} frame of point cloud, where the w2^{th} patch is an unmatched patch in the patch set of the j^{th} frame of point cloud; when the t2^{th} patch does not match any unmatched patch in the patch set of the j^{th} frame of point cloud, deleting, from respective matched patch sets of W frames of point clouds, a patch that has a matching relationship with the t2^{th} patch and that is in the matched patch sets of the W frames of point clouds, where the W frames of point clouds are point clouds, in the N frames of point clouds, that are processed before the reference frame of the j^{th} point cloud is processed; deleting the t2^{th} patch from the matched patch set of the reference frame; and after the N frames of point clouds are processed, obtaining M global matched patch sets, where one of the M global matched patch sets is a set of patches that have a matching relationship across the N frames of point clouds. After global matched patches of the N frames of point clouds are obtained, during packing (packing), a global matched patch of each frame of point cloud is preferably packed, and a non-global matched patch is then packed, to obtain an occupancy map of each frame of point cloud of the N frames of point clouds. Because global matched patches of all frames of point clouds in the N frames of point clouds are allocated with same or similar locations during packing, global matched patches in all the frames of generated occupancy maps are spatially consistent. This improves coding efficiency of occupancy maps, depth maps, and texture maps in subsequent coding.

It should be noted that, the W frames of point clouds include a 0^{th} frame of point cloud to a (j-2)^{th} frame of point cloud. The 0^{th} frame of point cloud is a point cloud that is first processed in the N frames of point clouds, and the (i-2)^{th} frame of point cloud is a point cloud that is processed in a (j-1)^{th} order in the N frames of point clouds.

The (j-2)^{th} frame of point cloud is a reference frame of the reference frame of the j^{th} frame of point cloud, that is, the (j-2)^{th} frame of point cloud is a reference frame of a (j-1)^{th} frame of point cloud, and the (j-1)^{th} frame of point cloud is a reference frame of the j^{th} frame of point cloud. The (j-2)^{th} frame of point cloud, the (j-1)^{th} frame of point cloud, and the j^{th} frame of point cloud are three consecutive processed point clouds in the N frames of point clouds, the (j-2)^{th} frame of point cloud is processed before the (j-1)^{th} frame of point cloud, and the (j-1)^{th} frame of point cloud is processed before the j^{th} frame of point cloud.

Before patches in matched patch sets of the N frames of point clouds are processed, a state identifier of each patch in a patch set of each frame of point cloud of the N frames of point clouds is set to a first identifier (for example, false or 0) and/or a target index of each patch is set a default value. During the matching operation, whether a patch is an unmatched patch is determined based on whether a state identifier of the patch is the first identifier or whether a target index of the patch is the default value. In other words, the unmatched patch in the patch set of the j^{th} frame of point cloud is a patch whose state identifier is the first identifier in the patch set of the j^{th} frame of point cloud or a patch whose target index is the default value.

In a possible implementation, when the t2^{th} patch matches the w2^{th} patch, the t2^{th} patch is stored in the matched patch set of the j^{th} frame of point cloud, and a target index of the w2^{th} patch is set to an index of the w2^{th} patch and/or a state identifier of the w2^{th} patch is set to the second identifier (for example, true or 1), where the second identifier is used to indicate that the patch is a matched patch. The index of the w2^{th} patch is a location index of the w2^{th} patch in a patch set to which the w2^{th} patch belongs.

Assuming that the reference frame of the j^{th} frame of point cloud is the (j-1)^{th} frame, the deleting, from respective matched patch sets of W frames of point clouds, a patch that has a matching relationship with the t2^{th} patch and that is in the matched patch sets of the W frames of point clouds is specifically: searching a matched patch set of the reference frame of point cloud of the (j-1)^{th} frame of point cloud for a t2'^{th} patch based on a target index of the t2^{th} patch, where the target index of the t2^{th} patch is an index of the t2'^{th} patch, and deleting the t2'^{th} patch from the matched patch set of the reference frame of the (j-1)^{th} frame of point cloud, where the reference frame of the (j-1)^{th} frame of point cloud may be a (j-2)^{th} frame of point cloud; and searching a matched patch set of a reference frame of the reference frame of the (j-1)^{th} frame of point cloud based on a target index of the t2'^{th} patch for a patch whose index is the target index of the t2'^{th} patch, and deleting the patch from the matched patch set of the reference frame of the reference frame of the (j-1)^{th} frame of point cloud, where the reference frame of the reference frame of the (j-1)^{th} frame of point cloud is a (j-3)^{th} frame of point cloud. By that analogy, the process ends until the patch that has a matching relationship with the t2^{th} patch and that is in the matched patch sets of the W frames of point clouds is deleted from the respective matched patch sets of the W frames of point clouds.

For example, as shown in FIG. 9, it is assumed that N = 4, that is, there are four frames of point clouds, and a patch set of each frame of point cloud includes six patches. It is further assumed that, a 0^{th} frame of point cloud is a point cloud that is first processed in the four frames of point clouds, and all patches in a patch set of the 0^{th} frame of point cloud are stored in a matched patch set of the 0^{th} frame of point cloud. In this case, the matched patch set of the 0^{th} frame of point cloud includes: a patch[0], a patch[1], a patch[2], a patch[3], a patch[4], and a patch[5]. Indexes of the five patches are respectively 0, 1, 2, 3, 4, and 5.

It should be noted that, before the four frames of point clouds are processed, a state identifier of each patch in a patch set of each frame of point cloud of the four frames of point clouds is the first identifier (for example, false or 0) and/or a target index of each patch is the default value.

When a patch set of a first frame of point cloud is processed, the 0^{th} frame of point cloud is used as a reference frame of the first frame of point cloud. The matched patch set of the 0^{th} frame of point cloud is traversed, and a matching operation is performed on the patch[0] in the matched patch set of the 0^{th} frame of point cloud and an unmatched patch in the patch set of the first frame of point cloud. It is determined that the patch[0] in the matched patch set of the 0^{th} frame of point cloud matches a patch[1] in the patch set of the first frame of point cloud, the patch[1] in the patch set of the first frame of point cloud is stored in a matched patch set of the first frame of point cloud, and a state identifier of the patch[1] in the patch set of the first frame of point cloud is set to the second identifier (for example, true or 1) and/or a target index of the patch[1] in the patch set of the first frame of point cloud is set to an index (for example, 0) of the patch[0] in the matched patch set of the 0^{th} frame of point cloud. Then, a matching operation is performed on the patch[1] in the matched patch set of the 0^{th} frame of point cloud and an unmatched patch in the patch set of the first frame of point cloud, and it is determined that the patch[1] in the matched patch set of the 0^{th} frame of point cloud matches the patch[0] in the patch set of the first frame of point cloud. The patch[0] in the patch set of the first frame of point cloud is stored in the matched patch set of the first frame of point cloud, and a state identifier of the patch[0] in the patch set of the first frame of point cloud is set to the second identifier (for example, true or 1) and/or a target index of the patch[0] in the patch set of the first frame of point cloud is set to an index (for example, 1) of the patch[1] in the matched patch set of the 0^{th} frame of point cloud. By that analogy, after the matched patch set of the 0^{th} frame of point cloud is traversed, it is further determined that the patch[2], the patch[3], and the patch[4] in the matched patch set of the 0^{th} frame of point cloud respectively match a patch[2], a patch[3], and a patch[4] in the patch set of the first frame of point cloud. The patch[2], the patch[3], and the patch[4] in the patch set of the first frame of point cloud are stored in the matched patch set of the first frame of point cloud. A state identifier of the patch[2] in the patch set of the first frame of point cloud is set to the second identifier (for example, true or 1) and/or a target index of the patch[2] in the patch set of the first frame of point cloud is set to an index (for example, 2) of the patch[2] in the matched patch set of the 0^{th} frame of point cloud. A state identifier of the patch[3] in the patch set of the first frame of point cloud is set to the second identifier (for example, true or 1) and/or a target index of the patch[3] in the patch set of the first frame of point cloud is set to an index (for example, 3) of the patch[3] in the matched patch set of the 0^{th} frame of point cloud. A state identifier of the patch[4] in the patch set of the first frame of point cloud is set to the second identifier (for example, true or 1) and/or a target index of the patch[4] in the patch set of the first frame of point cloud is set to an index (for example, 4) of the patch[4] in the matched patch set of the 0^{th} frame of point cloud. It is determined that the patch[5] in the matched patch set of the 0^{th} frame of point cloud does not match any patch in the patch set of the first frame of point cloud, and the patch[5] is deleted from the matched patch set of the 0^{th} frame of point cloud. In this case, the matched patch set of the 0^{th} frame of point cloud includes the patch[0], the patch[1], the patch[2], the patch[3], and the patch[4], and the matched patch set of the first frame of point cloud includes the patch[1], the patch[0], patch[2], the patch[3], and the patch[4].

When a patch set of the second frame of point cloud is processed, the first frame of point cloud is used as a reference frame of the second frame of point cloud. The matched patch set of the first frame of point cloud is traversed, and a matching operation is performed on the patch[1] in the matched patch set of the first frame of point cloud and each patch in a patch set of the second frame of point cloud. It is determined that the patch[1] in the matched patch set of the first frame of point cloud does not match any patch in the patch set of the second frame of point cloud, and the patch[1] in the matched patch set of the first frame of point cloud is deleted from the matched patch set of the first frame of point cloud. Because a target index of the patch[1] in the matched patch set of the first frame of point cloud is the index of the patch[0] in the matched patch set of the 0^{th} frame of point cloud, the patch[0] in the matched patch set of the 0^{th} frame of point cloud is deleted from the matched patch set of the 0^{th} frame of point cloud. Then, a matching operation is performed on the patch[0] in the matched patch set of the first frame of point cloud and an unmatched patch in a patch set of the second frame of point cloud; it is determined that the patch[0] in the matched patch set of the first frame of point cloud matches the patch[0] in the patch set of the second frame of point cloud; the patch[0] in the patch set of the second frame of point cloud is stored in a matched patch set of the second frame of point cloud; and a state identifier of the patch[0] in the patch set of the second frame of point cloud is set to the second identifier (for example, true or 1) and/or a target index of the patch[0] in the patch set of the second frame of point cloud is set to an index (for example, 0) of the patch[0] in the matched patch set of the first frame of point cloud. By that analogy, after the matched patch set of the first frame of point cloud is traversed, and it is further determined that the patch[2], the patch[3], and the patch[4] in the matched patch set of the first frame of point cloud respectively match a patch[3], a patch[4], and a patch[5] in the patch set of the second frame of point cloud. The patch[3], the patch[4], and the patch[5] in the patch set of the second frame of point cloud are stored in the matched patch set of the second frame of point cloud. A state identifier of the patch[3] in the patch set of the second frame of point cloud is set to the second identifier (for example, true or 1) and/or a target index of the patch[3] in the patch set of the second frame of point cloud is set to an index (for example, 2) of the patch[2] in the matched patch set of the first frame of point cloud. A state identifier of the patch[4] in the patch set of the second frame of point cloud is set to the second identifier (for example, true or 1) and/or a target index of the patch[4] in the patch set of the second frame of point cloud is set to an index (for example, 3) of the patch[3] in the matched patch set of the first frame of point cloud. A state identifier of the patch[5] in the patch set of the second frame of point cloud is set to the second identifier (for example, true or 1) and/or a target index of the patch[5] in the patch set of the second frame of point cloud is set to an index (for example, 4) of the patch[4] in the matched patch set of the first frame of point cloud. In this case, the matched patch set of the 0^{th} frame of point cloud includes the patch[1], the patch[2], the patch[3], and the patch[4]; the matched patch set of the first frame of point cloud includes the patch[0], the patch[2], the patch[3], and the patch[4]; and the matched patch set of the second frame of point cloud includes the patch[0], the patch[3], the patch[4], and the patch[5].

When a patch set of a third frame of point cloud is processed, the second frame of point cloud is used as a reference frame of the third frame of point cloud. The matched patch set of the second frame of point cloud is traversed, and a matching operation is performed on the patch[0] in the matched patch set of the second frame of point cloud and each patch in a patch set of the third frame of point cloud. It is determined that the patch[0] in the matched patch set of the second frame of point cloud matches a patch[2] in the patch set of the third frame of point cloud; the patch[2] in the patch set of the third frame of point cloud is stored in a matched patch set of the third frame of point cloud; and a state identifier of the patch[2] in the patch set of the third frame of point cloud is set to the second identifier (for example, true or 1) and/or a target index of the patch[2] in the patch set of the third frame of point cloud is set to an index (for example, 0) of the patch[0] in the matched patch set of the second frame of point cloud. Then, a matching operation is performed on the patch[3] in the matched patch set of the second frame of point cloud and an unmatched patch in the patch set of the third frame of point cloud; it is determined that the patch[3] in the matched patch set of the second frame of point cloud matches a patch[4] in the patch set of the third frame of point cloud; the patch[4] in the patch set of the third frame of point cloud is stored in the matched patch set of the third frame of point cloud; and a state identifier of the patch[4] in the patch set of the third frame of point cloud is set to the second identifier (for example, true or 1) and/or a target index of the patch[4] in the patch set of the third frame of point cloud is set to an index (for example, 3) of the patch[3] in the matched patch set of the second frame of point cloud. By that analogy, after the matched patch set of the 0^{th} frame of point cloud is traversed, it is further determined that the patch[4] in the matched patch set of the second frame of point cloud matches a patch[5] in the patch set of the third frame of point cloud. The patch[5] in the patch set of the third frame of point cloud is stored in the matched patch set of the third frame of point cloud. A state identifier of the patch[5] in the patch set of the third frame of point cloud is set to the second identifier (for example, true or 1) and/or a target index of the patch[5] in the patch set of the third frame of point cloud is set to an index (for example, 4) of a patch[4] in the matched patch set of the second frame of point cloud. It is determined that the patch[5] in the matched patch set of the second frame of point cloud does not match any unmatched patch in the patch set of the third frame of point cloud, and the patch[5] in the matched patch set of the second frame of point cloud is deleted from the matched patch set of the second frame of point cloud. Because a target index of the patch[5] in the matched patch set of the second frame of point cloud is the index of the patch[4] in the matched patch set of the first frame of point cloud, and the target index of the patch[4] in the matched patch set of the first frame of point cloud is the index of the patch[4] in the matched patch set of the 0^{th} frame of point cloud, the patch[4] in the matched patch set of the 0^{th} frame of point cloud, the patch[4] in the matched patch set of the first frame of point cloud, and the patch[5] in the matched patch set of the second frame of point cloud are deleted from the corresponding matched patch sets. In this case, the matched patch set of the 0^{th} frame of point cloud includes: the patch[1], the patch[2], and the patch[3]; the matched patch set of the first frame of point cloud includes: the patch[0], the patch[2], and the patch[3]; the matched patch set of the second frame of point cloud includes: the patch[0], the patch[3], and the patch[4]; and the matched patch set of the third frame of point cloud includes: the patch[2], the patch[4], and the patch[5].

In this case, the patches stored in the matched patch set of the four frames of point clouds are all global matched patches, and the patches are stored in a sequence of one-to-one correspondence. The one-to-one correspondence means that there is a matching relationship between a z^{th} patch in a matched patch set of an i1^{th} frame of point cloud and a z^{th} patch in a matched patch set of an i2^{th} frame of point cloud, where i I = 1, 2, 3, 4, and i2=1, 2, 3, and 4, and i is unequal to j.

Three global matched patch sets may be obtained based on patches in the matched patch set of the four frames of point clouds, and the three global matched patch sets may be expressed as:
a global matched patch set 0: frame[0].patch[1], frame[1].patch[0], frame[2].patch[0], and frame[3] .patch[2];
a global matched patch set 1: frame[0].patch[2], frame[1].patch[2], frame[2].patch[3], and frame[3].patch[4]; and
a global matched patch set 2: frame[0].patch[3], frame[1].patch[3], frame[2].patch[4], and frame[3].patch[5].

frame [i].patch[z] indicates a z^{th} patch in a patch set of an i^{th} frame of point cloud. An m^{th} global matched patch set in the three global matched patch sets includes an m^{th} patch in the matched patch set of each frame of point cloud in the three frames of point clouds. In this case, m is 0, 1, or 2.

It can be learned that, according to the solution in the implementations of this application, after the global matched patches of the N frames of point clouds are obtained, during packing (packing), a global matched patch in each frame of point cloud is preferably packed, and a non-global matched patch is then packed, to obtain an occupancy map of each frame of point cloud of the N frames of point clouds. Because the global matched patches of all the N frames of point clouds are allocated with same or similar locations during packing, the global matched patches in generated occupancy maps in all the frames are spatially consistent. This improves coding efficiency of occupancy maps, depth maps, and texture maps in subsequent coding.

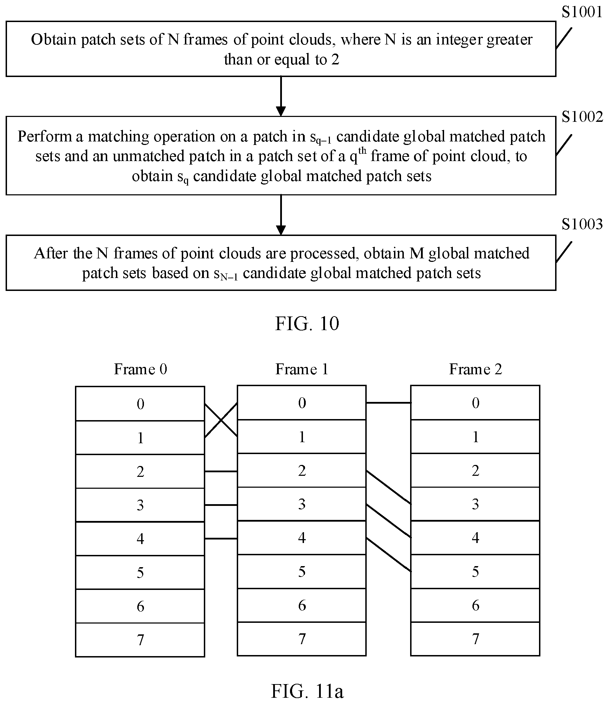

FIG. 10 is a schematic flowchart of a method for obtaining a global matched patch according to an implementation of this application. As shown in FIG. 10, the method includes the following steps.

S 1001: Obtain patch sets of N frames of point clouds, where N is an integer greater than or equal to 2.

Optionally, the N frames of point clouds may be a group of frames (group of frame, GOF), or the N frames of point clouds are N consecutive frames of point clouds in one GOF. Certainly, this is not limited in this implementation of this application.

S1002: Perform a matching operation on a patch in s_{q-1} candidate global matched patch sets and an unmatched patch in a patch set of a q^{th} frame of point cloud, to obtain s_{q} candidate global matched patch sets.

At least one of the s_{q} candidate global matched patch sets is a set of patches that have a matching relationship across N1 frames of point clouds, the N1 frames of point clouds are all or some frames of point clouds in the N frames of point clouds, and q = {1, 2, ..., N-1}.

Before a matching operation is performed on patches in the patch sets of the N frames of point clouds, a state identifier of each patch in a patch set of each frame of point cloud of the N frames of point clouds is a first identifier (for example, false or 0) and/or a target index of each patch is a default value. During the matching operation, whether a patch is an unmatched patch is determined based on whether a state identifier of the patch is the first identifier or whether a target index of the patch is the default value. In other words, the unmatched patch in the patch set of the q^{th} frame of point cloud is a patch whose state identifier is the first identifier in the patch set of the q^{th} frame of point cloud or a patch whose target index is the default value.

It should be noted that, a point cloud that is first processed is any frame of point cloud in the N frames of point cloud, for example, a 0^{th} frame of point cloud. The point cloud that is first processed in the N frames of point clouds is specifically a point cloud whose patches in a patch set of the frame of point cloud are all stored in so candidate global matched patch sets, that is, the patch set of this frame of point cloud includes so patches.

In a possible implementation, the performing a matching operation on a patch in s_{q-1} candidate global matched patch sets and an unmatched patch in a patch set of a q^{th} frame of point cloud, to obtain s_{q} candidate global matched patch sets includes:
traversing the s_{q-1} candidate global matched patch sets, and performing a matching operation on one or more patches in a k^{th} candidate global matched patch set and a w3^{th} patch in the patch set of the q^{th} frame of point cloud, where the w3^{th} patch is an unmatched patch in the patch set of the q^{th} frame of point cloud, and a value of k ranges from 0 to s_{q-1}-1; and
when a t3^{th} patch matches the w3^{th} patch, storing the w3^{th} patch in the k^{th} candidate global matched patch set, where the k^{th} candidate global matched patch set is included in the s_{q} candidate global matched patch sets, and the t3^{th} patch is any one of the one or more patches.

When the t3^{th} patch matches the w3^{th} patch, a state identifier of the w3^{th} patch is set to a second identifier (for example, true or 1), where the second identifier is used to indicate that the w3^{th} patch is a matched patch and/or a target index of the w3^{th} patch is set to an index of the t3^{th} patch.

It should be noted that, a patch in the k^{th} candidate global matched patch set is any patch in the k^{th} candidate global matched patch set. For example, the patch may be a patch that is updated to the k^{th} candidate global matched patch set when a patch set of a (q-1)^{th} frame of point cloud is processed. The (q-1)^{th} frame of point cloud is processed before the q^{th} frame of point cloud. A plurality of patches in the k^{th} candidate global matched patch set may be some or all patches in the k^{th} candidate global matched patch set.

In a possible implementation, to keep a non-global patch, when the one or more patches in the k^{th} candidate global matched patch set do not match any unmatched patch in the patch set of the q^{th} frame of point cloud, no processing is performed on the patch in the k^{th} candidate global matched patch set. In this case, s_{q} = s_{q-1}. A purpose of keeping non-global matched patches is that, the non-global matched patches of all the N frames of point clouds are allocated with same locations or similar locations during packing, so that the non-global matched patches of all the N frames of point clouds are also spatially consistent. This subsequently improves coding efficiency of occupancy maps, depth maps, and texture maps.

In a possible implementation, to save storage space of hardware and directly obtain a global matched patch, when the one or more patches in the k^{th} candidate global matched patch set do not match any unmatched patch in the patch set of the q^{th} frame of point cloud, the k^{th} candidate global matched patch set is cleared or deleted. The global matched patch is a patch that has a matching relationship across the N frames of point clouds. When k^{th} candidate global matched patch set is cleared, s_{q} = s_{q-1}. When k^{th} candidate global matched patch set is deleted, s_{q} < s_{q-1}.

In a possible implementation, after the matching operation is performed on the patch in the s_{q-1} candidate global matched patch sets and the unmatched patch in the patch set of the q^{th} frame of point cloud, if there are still d unmatched patches in the patch set of the q^{th} frame of point cloud, d candidate global matched patch sets are added, and the d unmatched patches are stored in the added d candidate global matched patch sets, where the s_{q} candidate global matched patch sets include the added d candidate global matched patch sets and the s_{q-1} candidate global matched patch sets. In this case, s_{q} > s_{q-1}.

When q = N-1, a matching operation is performed on a patch in s_{N-2} candidate global matched patch sets and an unmatched patch in a patch set of an (N-1)^{th} frame of point cloud, to obtain s_{N-1} candidate global matched patch sets.

S1003: After the N frames of point clouds are processed, obtain M global matched patch sets based on the s_{N-1} candidate global matched patch sets.

It should be noted that, after the N frames of point clouds are processed in the related manner described in step S1002, the s_{N-1} candidate global matched patch sets may be obtained. Patches in some of the s_{N-1} candidate global matched patch sets are non-global matched patches, and some patches in the s_{N-1} candidate global matched patch sets are global matched patches.

In a possible implementation, the obtaining M global matched patch sets based on the s_{N-1} candidate global matched patch sets includes: determining the s_{N-1} candidate global matched patch sets as the M global matched patch sets; or determining, as the M global matched patch sets, candidate global matched patch sets each in which a quantity of patches is greater than or equal to a first threshold in the s_{N-1} candidate global matched patch sets.

The M global matched patch sets are sets of patches that have a matching relationship across the N frames of point clouds and sets of patches that have a matching relationship across N2 frames of point clouds.

It should be noted that, the s_{q-1} candidate global matched patch sets are traversed; the matching operation is performed on the one or more patches in the k^{th} candidate global matched patch set and the w3^{th} patch in the patch set of the q^{th} frame of point cloud; and when the one or more patches in the k^{th} candidate global matched patch set do not match any unmatched patch in the patch set of the q^{th} frame of point cloud, the k^{th} candidate global matched patch set is deleted. After the patch sets of the N frames of point clouds are processed, if patches in the obtained s_{N-1} candidate global matched patch sets are all global matched patches, the s_{N-1} candidate global matched patch sets may be directly determined as the M global matched patch sets. After the N frames of point clouds are processed according to another method in this implementation, patches in the obtained s_{N-1} candidate global matched patch sets include a global matched patch and a non-global matched patch. In this case, the first threshold needs to be set, and the candidate global matched patch sets each in which the quantity of patches is greater than or equal to the first threshold in the s_{N-1} candidate global matched patch sets are determined as the M global matched patch sets.

In a specific implementation, as shown in FIG. 11a, N = 3 means that there are three frames of point clouds: a 0^{th} frame of point cloud, a first frame of point cloud, and a second frame of point cloud. A patch set of each frame of point cloud in the three frames of point clouds includes eight patches. First, the eight patches in patch data in the 0^{th} frame of point cloud are stored in eight candidate global matched patch sets. In this case, the following elements are stored in the eight candidate global matched patch sets (global patch set):
globalpatchset[0]: globalpatch<0,0>;
globalpatchset[1]: globalpatch<0,1>;
globalpatchset[2]: globalpatch<0,2>;
globalpatchset[3]: globalpatch<0,3>;
globalpatchset[4]: globalpatch<0,4>;
globalpatchset[5]: globalpatch<0,5>;
globalpatchset[6]: globalpatch<0,6>; and
globalpatchset[7]: globalpatch<0,7>.

It should be noted that, the eight candidate global matched patch sets are globalpatchset[0], globalpatchset[1], globalpatchset[2], globalpatchset[3], globalpatchset[4], globalpatchset[5], globalpatchset[6], and globalpatchset[7]. The elements stored in the eight candidate global matched patch sets are patches.

It should be noted that, globalpatch<i,z> indicates a z^{th} patch in a patch set of an i^{th} frame of point cloud. For example, globalpatch<2,4> indicates a patch 4 in a patch set of the second frame of point cloud, and globalpatch<1,0> indicates a patch 0 in a patch set of the first frame of point cloud. Before the three frames of point clouds are processed, a state identifier of each patch in a patch set of each frame of point cloud of the three frames of point clouds is the first identifier (for example, false or 0) and/or a target index of each patch is a default value.

Then, a matching operation is performed on a patch in each of the foregoing eight candidate global matched patch sets and an unmatched patch in the patch set of the first frame of point cloud. As shown in FIG. 11a, it is determined that globalpatch<0,0> in the candidate global matched patch set 0 matches globalpatch<1,1>, and globalpatch<1,1> is stored in the candidate global matched patch set 0, and a state identifier of globalpatch<1,1> is set to the second identifier (for example, true or 1) and/or a target index of globalpatch<1,1> is set to an index (for example, 0) of globalpatch<0,0>. It is determined that globalpatch<0,1> in the candidate global matched patch set 1 matches globalpatch<1,0>, and globalpatch<1,0> is stored in the candidate global matched patch set 1, and a state identifier of globalpatch<1,0> is set to the second identifier (for example, true or 1) and/or a target index of globalpatch<1,0> is set to an index (for example, 1) of globalpatch<0,1>. It is determined that globalpatch<0,2> in the candidate global matched patch set 2 matches globalpatch<1,2>, globalpatch<1,2> is stored in the candidate global matched patch set 2, and a state identifier of globalpatch<1,2> is set to the second identifier (for example, true or 1) and/or a target index of globalpatch<1,2> is set to an index (for example, 2) of globalpatch<0,2>. It is determined that globalpatch<0,3> in the candidate global matched patch set 3 matches globalpatch<1,3>, globalpatch<1,3> is stored in the candidate global matched patch set 3, and a state identifier of globalpatch<1,3> is stored in to the second identifier (for example, true or 1) and/or a target index of globalpatch<1,3> is set to an index (for example, 3) of globalpatch<0,3>. It is determined that globalpatch<0,4> in the candidate global matched patch set 4 matches globalpatch<1,1>, and globalpatch<1,1> is stored in the candidate global matched patch set 4, and a state identifier of globalpatch<1,4> is set to the second identifier (for example, true or 1) and/or a target index of globalpatch<1,4> is set to an index (for example, 4) of globalpatch<0,4>. It is determined that globalpatch<0,5> in the candidate global matched patch set 5, globalpatch<0,6> in the candidate global matched patch set 6, and globalpatch<0,7> in the candidate global matched patch set 7 do not match unmatched patches in the patch set of the first frame of point cloud. In this case, the eight candidate global matched patch sets may be expressed as:
globalpatchset[0]: globalpatch<0,0>, globalpatch<1,1>;
globalpatchset[1]: globalpatch<0,1>, globalpatch<1,0>;
globalpatchset[2]: globalpatch<0,2>, globalpatch<1,2>;
globalpatchset[3]: globalpatch<0,3>, globalpatch<1,3>;
globalpatchset[4]: globalpatch<0,4>, globalpatch<1,4>;
globalpatchset[5]: globalpatch<0,5>;
globalpatchset[6]: globalpatch<0,6>; and
globalpatchset[7]: globalpatch<0,7>.

Then, a matching operation is performed on a patch in each of the foregoing eight candidate global matched patch sets and a patch in the patch set of the second frame of point cloud. As shown in FIG. 11a, it is determined that globalpatch<1,0> in the candidate global matched patch set 1 matches globalpatch<2,0>, globalpatch<2,0> is stored in the candidate global matched patch set 1, and a state identifier of globalpatch<2,0> is set to the second identifier (for example, true or 1) and/or a target index of globalpatch<2,0> is set to an index (for example, 0) of globalpatch<1,0>. It is determined that globalpatch<1,2> in the candidate global matched patch set 2 matches globalpatch<2,3>, globalpatch<2,3> is stored in the candidate global matched patch set 2, and a state identifier of the globalpatch<2,3> is set to the second identifier (for example, true or 1) and/or a target index of globalpatch<2,3> is set to an index (for example, 2) of globalpatch<1,2>. It is determined that globalpatch<1,3> in the candidate global matched patch set 3 matches globalpatch<2,4>, globalpatch<2,4> is stored in the candidate global matched patch set 3, and a state identifier of the globalpatch<2,4> is set to the second identifier (for example, true or 1) and/or a target index of the globalpatch<2,4> is set to an index (for example, 3) of globalpatch<1,3>. It is determined that globalpatch<1,4> in the candidate global matched patch set 4 matches globalpatch<2,5>, globalpatch<2,5> is stored in the candidate global matched patch set 4, and a state identifier of globalpatch<2,5> is set to the second identifier (for example, true or 1) and/or a target index of globalpatch<2,5> is set to an index (for example, 4) of globalpatch<1,4>. When patches in the candidate global matched patch sets 0, 5, 6, and 7 do not match the patch in the patch set in the second frame of point cloud, no processing is performed on the candidate global matched patch sets 0, 5, 6, and 7. In this case, the eight candidate global matched patch sets may be expressed as:
globalpatchset[0]: globalpatch<0,0>, globalpatch<1,1>;
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>;
globalpatchset[4]: globalpatch<0,4>, globalpatch<1,4>, globalpatch<2,5>;
globalpatchset[5]: globalpatch<0,5>;
globalpatchset[6]: globalpatch<0,6>; and
globalpatchset[7]: globalpatch<0,7>.

Finally, global matched patch sets are determined from the candidate global matched patch sets based on the first threshold. Assuming that the first threshold is 2, the global matched patch sets are determined from the eight candidate global matched patch sets. The global matched patch sets determined from the eight candidate global matched patch sets based on the first threshold 2 are as follows:
globalpatchset[0]: globalpatch<0,0>, globalpatch<1,1>;
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>; and
globalpatchset[4]: globalpatch<0,4>, globalpatch<1,4>, globalpatch<2,5>.

globalpatchset[0] is a set of patches that have a matching relationship across two frames of point clouds; and globalpatchset[1], globalpatchset[2], globalpatchset[3], and globalpatchset[4] each are a set of patches that have a matching relationship across three frames of point clouds.

Assuming that the first threshold is 3, global matched patch sets determined from the foregoing eight candidate global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>; and
globalpatchset[4]: globalpatch<0,4>, globalpatch<1,4>, globalpatch<2,5>.

globalpatchset[1], globalpatchset[2], globalpatchset[3], and globalpatchset[4] each are a set of patches that have a matching relationship across three frames of point clouds.

In an implementation, in a process of separately performing a matching operation on patches in eight candidate global matched patch sets that are used to respectively store eight patches in a patch set of a 0^{th} frame of point cloud and a patch in a patch set of a first frame of point cloud, when there is a candidate global matched patch set in which no patch matches the patch in the patch set of the first frame of point cloud, the candidate global matched patch set is cleared. In this case, the eight candidate global matched patch sets may be expressed as:
globalpatchset[0]: globalpatch<0,0>, globalpatch<1,1>;
globalpatchset[1]: globalpatch<0,1>, globalpatch<1,0>;
globalpatchset[2]: globalpatch<0,2>, globalpatch<1,2>;
globalpatchset[3]: globalpatch<0,3>, globalpatch<1,3>;
globalpatchset[4]: globalpatch<0,4>, globalpatch<1,4>;
globalpatchset[5]: empty;
globalpatchset[6]: empty; and
globalpatchset[7]: empty.

Similarly, in the eight candidate global matched patch sets, when there is a candidate global matched patch set in which no patch matches a patch in a patch set of a second frame of point cloud, the candidate global matched patch set is cleared. In this case, the eight candidate global matched patch sets may be expressed as:
globalpatchset[0]: empty;
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>;
globalpatchset[4]: globalpatch<0,4>, globalpatch<1,4>, globalpatch<2,5>;
globalpatchset[5]: empty;
globalpatchset[6]: empty; and
globalpatchset[7]: empty.

In the process of determining global matched patch sets from the eight candidate global matched patch sets, non-empty sets in the eight candidate global matched patch sets are determined as the global matched patch sets, to obtain four global matched patch sets. The four global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>; and
globalpatchset[4]: globalpatch<0,4>, globalpatch<1,4>, globalpatch<2,5>.

In an implementation, in a process of separately performing a matching operation on patches in eight candidate global matched patch sets that are used to respectively store eight patches in a patch set of a 0^{th} frame of point cloud and a patch in a patch set of a first frame of point cloud, when there is a candidate global matched patch set in which no patch matches the patch in the patch set of the first frame of point cloud, the candidate global matched patch set is deleted. In this case, the remaining five candidate global matched patch sets may be expressed as:
globalpatchset[0]: globalpatch<0,0>, globalpatch<1,1>;
globalpatchset[1]: globalpatch<0,1>, globalpatch<1,0>;
globalpatchset[2]: globalpatch<0,2>, globalpatch<1,2>;
globalpatchset[3]: globalpatch<0,3>, globalpatch<1,3>; and
globalpatchset[4]: globalpatch<0,4>, globalpatch<1,4>.

Then, a matching operation is performed on patches in the foregoing five candidate global matched patch sets and unmatched patches in a patch set of a second frame of point cloud. When it is determined that globalpatch<1,1> in the candidate global matched patch set 0 does not match none of the unmatched patches in the patch set of the second frame of point cloud, the candidate global matched patch set 0 is deleted. In this case, the remaining four candidate global matched patch sets are all global matched patch sets. The four global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>; and
globalpatchset[4]: globalpatch<0,4>, globalpatch<1,4>, globalpatch<2,5>.

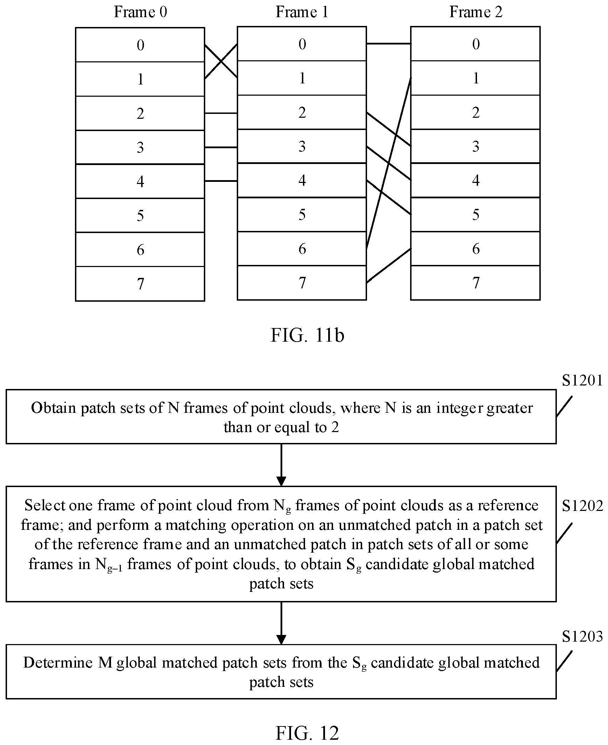

In another specific implementation, as shown in FIG. 11b, N = 3 means that there are three frames of point clouds: a 0^{th} frame of point cloud, a first frame of point cloud, and a second frame of point cloud. A patch set of each frame of point cloud in the three frames of point clouds includes eight patches. First, the eight patches in patch data in the 0^{th} frame of point cloud are stored in eight candidate global matched patch sets. In this case, the following elements are stored in the eight candidate global matched patch sets (global patch set):
globalpatchset[0]: globalpatch<0,0>;
globalpatchset[1]: globalpatch<0,1>;
globalpatchset[2]: globalpatch<0,2>;
globalpatchset[3]: globalpatch<0,3>;
globalpatchset[4]: globalpatch<0,4>;
globalpatchset[5]: globalpatch<0,5>;
globalpatchset[6]: globalpatch<0,6>; and
globalpatchset[7]: globalpatch<0,7>.

It should be noted that, globalpatch<i,z> indicates a z^{th} patch in a patch set of an i^{th} frame of point cloud. For example, globalpatch<2,4> indicates a patch 4 in a patch set of the second frame of point cloud, and globalpatch<1,0> indicates a patch 0 in a patch set of the first frame of point cloud.

Before the three frames of point clouds are processed, a state identifier of each patch in a patch set of each frame of point cloud of the three frames of point clouds is a first identifier (for example, false or 0) and/or a target index of each patch is a default value. Then, a matching operation is performed on a patch in each of the foregoing eight candidate global matched patch sets and an unmatched patch in the patch set of the first frame of point cloud. For details, refer to the related descriptions about obtaining eight candidate global matched patch sets in the implementation shown in FIG. 11a. As shown in FIG. 11b, when it is determined that all patches in the eight candidate global matched patch sets do not match globalpatch<1,5>, globalpatch<1,6>, and globalpatch<1,7>, three candidate global matched patch sets are added, and globalpatch<1,5>, globalpatch<1,6> and globalpatch<1,7> are stored in the three added candidate global matched patch sets. In this case, a total of 11 candidate global matched patch sets are obtained. The 11 candidate global matched patch sets may be expressed as:
globalpatchset[0]: globalpatch<0,0>, globalpatch<1,1>;
globalpatchset[1]: globalpatch<0,1>, globalpatch<1,0>;
globalpatchset[2]: globalpatch<0,2>, globalpatch<1,2>;
globalpatchset[3]: globalpatch<0,3>, globalpatch<1,3>;
globalpatchset[4]: globalpatch<0,4>, globalpatch<1,4>;
globalpatchset[5]: globalpatch<0,5>;
globalpatchset[6]: globalpatch<0,6>;
globalpatchset[7]: globalpatch<0,7>;
globalpatchset[8]: globalpatch<1,5>;
globalpatchset[9]: globalpatch<1,6>; and
globalpatchset[10]: globalpatch<1,7>.

Then, a matching operation is performed on a patch in each of the foregoing 11 candidate global matched patch sets and an unmatched patch in the patch set of the second frame of point cloud. As shown in FIG. 11 b, it is determined that globalpatch<1,0> in the candidate global matched patch set 1 matches globalpatch<2,0>, globalpatch<2,0> is stored in the candidate global matched patch set 1, and a state identifier of globalpatch<2,0> is set to a second identifier (for example, true or 1) and/or a target index of globalpatch<2,0> is set to an index (for example, 0) of globalpatch<1,0>. It is determined that globalpatch<1,2> in the candidate global matched patch set 2 matches globalpatch<2,3>, globalpatch<2,3> is stored in the candidate global matched patch set 2, and a state identifier of the globalpatch<2,3> is set to the second identifier (for example, true or 1) and/or a target index of globalpatch<2,3> is set to an index (for example, 2) of globalpatch<1,2>. It is determined that globalpatch<1,3> in the candidate global matched patch set 3 matches globalpatch<2,4>, globalpatch<2,4> is stored in the candidate global matched patch set 3, and a state identifier of the globalpatch<2,4> is set to the second identifier (for example, true or 1) and/or a target index of the globalpatch<2,4> is set to an index (for example, 3) of globalpatch<1,3>. It is determined that globalpatch<1,4> in the candidate global matched patch set 4 matches globalpatch<2,5>, globalpatch<2,5> is stored in the candidate global matched patch set 4, and a state identifier of globalpatch<2,5> is set to the second identifier (for example, true or 1) and/or a target index of globalpatch<2,5> is set to an index (for example, 4) of globalpatch<1,4>. It is determined that globalpatch<1,6> in the candidate global matched patch set 9 matches globalpatch<2,1>, globalpatch<2,1> is stored in the candidate global matched patch set 4, and a state identifier of globalpatch<2,1> is set to the second identifier (for example, true or 1) and/or a target index of globalpatch<2,1> is set to an index (for example, 6) of globalpatch<1,6>. It is determined that globalpatch<1,7> in the candidate global matched patch set 10 matches globalpatch<2,6>, globalpatch<2,6> is stored in the candidate global matched patch set 10, and a state identifier of globalpatch<2,6> is set to the second identifier (for example, true or 1) and/or a target index of globalpatch<2,6> is set to an index (for example, 7) of globalpatch<1,7>. When patches in the candidate global matched patch sets 0, 5, 6, 7, and 8 do not match the unmatched patch in the patch set in the second frame of point cloud, no processing is performed on the candidate global matched patch sets 0, 5, 6, 7, and 8. When it is determined that globalpatch<2,7> does not match any match in the 11 candidate global matched patch sets, one candidate global matched patch set is added, and globalpatch<2,7> is stored in the added candidate global matched patch set. In this case, there are a total of 12 candidate global matched patch sets. The 12 candidate global matched patch sets may be expressed as:
globalpatchset[0]: globalpatch<0,0>, globalpatch<1,1>;
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>;
globalpatchset[4]: globalpatch<0,4>, globalpatch<1,4>, globalpatch<2,5>;
globalpatchset[5]: globalpatch<0,5>;
globalpatchset[6]: globalpatch<0,6>;
globalpatchset[7]: globalpatch<0,7>;
globalpatchset[8]: globalpatch<1,5>;
globalpatchset[9]: globalpatch<1,6>, globalpatch<2,1>;
globalpatchset[10]: globalpatch<1,7>, globalpatch<2,6>; and
globalpatchset[11]: globalpatch<2,7>.

Finally, global matched patch sets are determined from the 12 candidate global matched patch sets based on the first threshold. Assuming that the first threshold is 2, global matched patch sets are determined from the 12 candidate global matched patch sets. Seven global matched patch sets are determined from the 12 candidate global matched patch sets based on the first threshold 2. The seven global matched patch sets may be expressed as:
globalpatchset[0]: globalpatch<0,0>, globalpatch<1,1>;
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>;
globalpatchset[4]: globalpatch<0,4>, globalpatch<1,4>, globalpatch<2,5>;
globalpatchset[9]: globalpatch<1,6>, globalpatch<2,1>; and
globalpatchset[10]: globalpatch<1,7>, globalpatch<2,6>.

In the seven global matched patch sets, globalpatchset[0], globalpatchset[9], and globalpatchset[10] are sets of patches that have a matching relationship across two frames of point clouds, that is, globalpatchset[1], globalpatchset[2], and globalpatchset[10], and globalpatchset[1], globalpatchset[2], globalpatchset[3], and globalpatchset[4] are sets of patches that have a matching relationship across three frames of point clouds.

Assuming that the first threshold is 3, global matched patch sets determined from the 12 candidate global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>; and
globalpatchset[4]: globalpatch<0,4>, globalpatch<1,4>, globalpatch<2,5>.

In a possible implementation, in a process of separately performing a matching operation on patches in eight candidate global matched patch sets that are used to respectively store eight patches in a patch set of a 0^{th} frame of point cloud and a patch in a patch set of a first frame of point cloud, when there is a candidate global matched patch set in which no patch matches an unmatched patch in the patch set of the first frame of point cloud, the candidate global matched patch set is cleared. In this case, obtained 11 candidate global matched patch sets may be expressed as:
globalpatchset[0]: globalpatch<0,0>, globalpatch<1,1>;
globalpatchset[1]: globalpatch<0,1>, globalpatch<1,0>;
globalpatchset[2]: globalpatch<0,2>, globalpatch<1,2>;
globalpatchset[3]: globalpatch<0,3>, globalpatch<1,3>;
globalpatchset[4]: globalpatch<0,4>, globalpatch<1,4>;
globalpatchset[5]: empty;
globalpatchset[6]: empty;
globalpatchset[7]: empty;
globalpatchset[8]: globalpatch<1,5>;
globalpatchset[9]: globalpatch<1,6>; and
globalpatchset[10]: globalpatch<1,7>.

Similarly, in the 11 candidate global matched patch sets, when there is a candidate global matched patch set in which no patch matches an unmatched patch in a patch set of a second frame of point cloud, the candidate global matched patch set is cleared. In this case, obtained 12 candidate global matched patch sets may be expressed as:
globalpatchset[0]: empty;
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>;
globalpatchset[4]: globalpatch<0,4>, globalpatch<1,4>, globalpatch<2,5>;
globalpatchset[5]: empty;
globalpatchset[6]: empty;
globalpatchset[7]: empty;
globalpatchset[8]: empty;
globalpatchset[9]: globalpatch<1,6>, globalpatch<2,1>;
globalpatchset[10]: globalpatch<1,7>, globalpatch<2,6>; and
globalpatchset[11]: globalpatch<2,7>.

Then, global matched patch sets are determined from the 12 candidate global matched patch sets based on the first threshold. Assuming that the first threshold is 2, six global matched patch sets are determined from the 12 candidate global matched patch sets based on the first threshold 2. The six global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>;
globalpatchset[4]: globalpatch<0,4>, globalpatch<1,4>, globalpatch<2,5>;
globalpatchset[9]: globalpatch<1,6>, globalpatch<2,1>; and
globalpatchset[10]: globalpatch<1,7>, globalpatch<2,6>.

Assuming that the first threshold is 3, four global matched patch sets are determined from the 12 candidate global matched patch sets based on the first threshold 3. The four global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>; and
globalpatchset[4]: globalpatch<0,4>, globalpatch<1,4>, globalpatch<2,5>.

In a possible implementation, in a process of separately performing a matching operation on patches in eight candidate global matched patch sets that are used to respectively store eight patches in a patch set of a 0^{th} frame of point cloud and a patch in a patch set of a first frame of point cloud, when there is a candidate global matched patch set in which no patch matches an unmatched in the patch set of the first frame of point cloud, the candidate global matched patch set is deleted. In this case, eight candidate global matched patch sets may be expressed as:
globalpatchset[0]: globalpatch<0,0>, globalpatch<1,1>;
globalpatchset[1]: globalpatch<0,1>, globalpatch<1,0>;
globalpatchset[2]: globalpatch<0,2>, globalpatch<1,2>;
globalpatchset[3]: globalpatch<0,3>, globalpatch<1,3>;
globalpatchset[4]: globalpatch<0,4>, globalpatch<1,4>;
globalpatchset[8]: globalpatch<1,5>;
globalpatchset[9]: globalpatch<1,6>; and
globalpatchset[10]: globalpatch<1,7>.

Then, a matching operation is performed on patches in the foregoing eight candidate global matched patch sets and an unmatched patch in the patch set of the second frame of point cloud. When it is determined that neither globalpatch<1,1> in globalpatchset[0] nor globalpatch<1,5> in globalpatchset[8] matches the unmatched patch in the patch set of the second frame of point cloud, globalpatchset[0] and globalpatchset[8] are deleted. In this case, obtained seven candidate global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>;
globalpatchset[4]: globalpatch<0,4>, globalpatch<1,4>, globalpatch<2,5>;
globalpatchset[9]: globalpatch<1,6>, globalpatch<2,1>;
globalpatchset[10]: globalpatch<1,7>, globalpatch<2,6>; and
globalpatchset[11]: globalpatch<2,7>

Then, global matched patch sets are determined from the 7 candidate global matched patch sets based on the first threshold. Assuming that the first threshold is 2, six global matched patch sets are determined from the seven candidate global matched patch sets based on the first threshold 2. The six global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>;
globalpatchset[4]: globalpatch<0,4>, globalpatch<1,4>, globalpatch<2,5>;
globalpatchset[9]: globalpatch<1,6>, globalpatch<2,1>; and
globalpatchset[10]: globalpatch<1,7>, globalpatch<2,6>.

The sets globalpatchset[1], globalpatchset[2], globalpatchset[3], and globalpatchset[4] all are sets of patches that have a matching relationship across three frames of point clouds. Both the set globalpatchset[9] and the set globalpatchset[10] are sets of patches that have a matching relationship across two frames of point clouds.

Assuming that the first threshold is 3, four global matched patch sets are determined from the seven candidate global matched patch sets based on the first threshold 3. The four global matched patch sets may be expressed as:
globalpatchset[1]: globalpatch<0,1>, globalpatch<1,0>, globalpatch<2,0>;
globalpatchset[2]: globalpatch<0,2>, globalpatch<1,2>, globalpatch<2,3>;
globalpatchset[3]: globalpatch<0,3>, globalpatch<1,3>, globalpatch<2,4>; and
globalpatchset[4]: globalpatch<0,4>, globalpatch<1,4>, globalpatch<2,5>.

In this case, the four sets all are sets of patches that have a matching relationship across three frames of point clouds.

Further, assuming that the q^{th} frame of point cloud is a point cloud that is last processed in the N frames of point cloud, and that matching between a patch in the patch set of the q^{th} frame of point cloud and the patch in the s_{q-1} candidate global matched patch sets is completed, if the patch set of the q^{th} frame of point cloud still includes an unmatched patch, no candidate global matched patch set is added to store the unmatched patch in the patch set of the q^{th} frame of point cloud.

It can be learned that, according to the solution in the implementations of this application, after global matched patches of the N frames of point clouds are obtained, during packing, a global matched patch in each frame of point cloud is preferably packed, and a non-global matched patch is then packed, to obtain an occupancy map of each frame of point cloud of the N frames of point clouds. Because the global matched patches of all the N frames of point clouds are allocated with same or similar locations during packing, the global matched patches in generated occupancy maps in all the frames are spatially consistent. This improves coding efficiency of occupancy maps, depth maps, and texture maps in subsequent coding.

FIG. 12 is a schematic flowchart of a method for obtaining a global matched patch according to an implementation of this application. As shown in FIG. 12, the method includes the following steps:
S 1201: Obtain patch sets of N frames of point clouds, where N is an integer greater than or equal to 2.

Optionally, the N frames of point clouds may be a group of frames (group of frame, GOF), or the N frames of point clouds are N consecutive frames of point clouds in one GOF. Certainly, this is not limited in this implementation of this application.

S 1202: Select one frame of point cloud from N_{g} frames of point clouds as a reference frame; and perform a matching operation on an unmatched patch in a patch set of the reference frame and an unmatched patch in patch sets of all or some frames in N_{g}-1 frames of point clouds, to obtain S_{g} candidate global matched patch sets.

The N_{g} frames of point clouds are some or all frames of point clouds in the N frames of point clouds. The N_{g}-1 frames of point clouds are point clouds other than the reference frame in the N_{g} frames of point clouds. The candidate global matched patch set is a set of patches that have a matching relationship across N_{g}' frames of point clouds. S_{g} is greater than or equal to S_{g-1}. S_{g} and S_{g-1} are respectively a quantity of candidate global matched patch sets obtained after g iterations and a quantity of candidate global matched patch sets obtained after g-1 iterations. The N_{g}' frames of point clouds are some or all frames of point clouds in the N_{g} frames of point clouds.

It should be noted that, a point cloud on which iteration is first performed is any frame of point cloud in the N frames of point clouds, for example, a 0^{th} frame of point cloud.

The point cloud on which iteration is first performed is specifically processed in the following manner: respectively storing all patches in a patch set of the point cloud on which iteration is first performed in so candidate global matched patch sets, that is, the patch set of this frame of point cloud includes so patches.

Before a matching operation is performed on patches in the patch sets of the N frames of point clouds, a state identifier of each patch in a patch set of each frame of point cloud of the N frames of point clouds is a first identifier (for example, false or 0) and/or a target index of each patch is a default value. During the matching operation, whether a patch is an unmatched patch is determined based on whether a state identifier of the patch is the first identifier or whether a target index of the patch is the default value. In other words, the unmatched patch is a patch whose state identifier is the first identifier or a patch whose target index is the default value.

Before the matching operation is performed on the unmatched patch in the patch set of the reference frame and the unmatched patch in the patch sets of all or some frames in the N_{g}-1 frames of point clouds, unmatched patches in the patch set of the reference frame are respectively stored in added s candidate global matched patch sets, where s represents a quantity of unmatched patches in the patch set of the reference frame.

In a possible implementation, the performing a matching operation on an unmatched patch in a patch set of the reference frame and an unmatched patch in patch sets of all or some frames in N_{g}-1 frames of point clouds, to obtain S_{g} candidate global matched patch sets includes:
traversing the patch set of the reference frame, and performing a matching operation on a w4^{th} patch in the patch set of the reference frame and a t4^{th} patch in a patch set of a p^{th} frame of point cloud, where the t4^{th} patch is an unmatched patch in the patch set of the p^{th} frame of point cloud, and the w4^{th} patch is an unmatched patch in the patch set of the reference frame; and
when the w4^{th} patch matches the t4^{th} patch, storing the t4^{th} patch in a candidate global matched patch set to which the w4^{th} patch belongs, where the S_{g} candidate global matched patch sets include the candidate global matched patch set to which the w4^{th} patch belongs, and the p^{th} frame of point cloud is one frame of point cloud in all or some frames of point clouds in the N_{g}-1 frames of point clouds.

In a possible implementation, the determining M global matched patch sets from the S_{g} candidate global matched patch sets includes:
determining, as the M global matched patch sets, candidate global matched patch sets each in which a quantity of patches is greater than or equal to a second threshold in the S_{g} candidate global matched patch sets.

It should be noted that, because patches in the candidate global matched patch set include a patch that has a matching relationship across Nᵢ frames of point clouds or a patch that has a matching relationship across some frames of the N_{g} frames of point clouds, N_{g}' is less than or equal to N_{g}. Because S_{g} and S_{g-1} are respectively the quantity of candidate global matched patch sets obtained after g iterations and the quantity of candidate global matched patch sets obtained after g-1 iterations, that is, S_{g} = S_{g-1} + T, where T represents a quantity of candidate global matched patches obtained during an i^{th} iteration, and T is greater than 0. Therefore, Sᵢ is greater than Sᵢ₋₁.

In a possible implementation, in a process of performing a matching operation on the unmatched patch in the patch set of the reference frame and unmatched patches in patch sets of the N_{g}-1 frames of point clouds, to obtain the S_{g} candidate global matched patch sets, first, a matching operation is performed on the unmatched patch in the patch set of the reference frame and unmatched patches in patch sets of some frames of point clouds in the N_{g}-1 frames of point clouds; then, a matching operation is performed on the unmatched patch in the patch set of the reference frame and unmatched patches in patch sets of some frames of point clouds, in which no matching operation is performed, in the N_{g}-1 frames of point clouds, and so on, the matching ends until a matching operation is performed on the unmatched patch in the patch set of the reference frame and an unmatched patch in a patch set of each frame of point cloud in the N_{g}-1 frames of point clouds, to obtain the S_{g} candidate global matched patch sets. For a specific patch matching process, refer to the related descriptions in the foregoing implementation. Details are not described herein again.

In other words, the N_{g}-1 frames of point clouds are divided into several groups, and all the groups have a same quantity of frames of point clouds or different quantities of frames of point clouds. Then, the matching operation is performed on the unmatched patch in the patch set of the reference frame of point cloud and an unmatched patch in a patch set of each frame of point cloud in each group, to obtain the S_{g} candidate global matched patch sets.

In a possible implementation, after the g^{th} iteration processing is performed, W1 frames of point clouds are selected from the N_{g}-1 frames of point clouds, where a patch set of each frame of point cloud in the W1 frames of point clouds includes an unmatched patch. One frame of point cloud is selected from the W1 frames of point clouds, and then a matching operation is performed on the unmatched patch in the patch set of the reference frame and unmatched patches in patch sets in W1-1 frames of point clouds according to the foregoing method, to obtain S_{g+1}-S_{g} candidate global matched patch sets. The W1-1 frames of point clouds are point clouds other than the reference frame in the W1 frames of point clouds.

S1203: Determine the M global matched patch sets from the S_{g} candidate global matched patch sets.

At least one of the M global matched patch sets is a patch set that has a matching relationship in N' frames of point clouds, M is an integer less than or equal to S_{g}, a value of g ranges from 1 to N-2, and the N' frames of point clouds are all or some frames in the N frames of point clouds.

In a possible implementation, the determining the M global matched patch sets from the S_{g} candidate global matched patch sets includes:
determining, as the M global matched patch sets, candidate global matched patch sets each in which a quantity of patches is greater than or equal to a second threshold in the S_{g} candidate global matched patch sets.

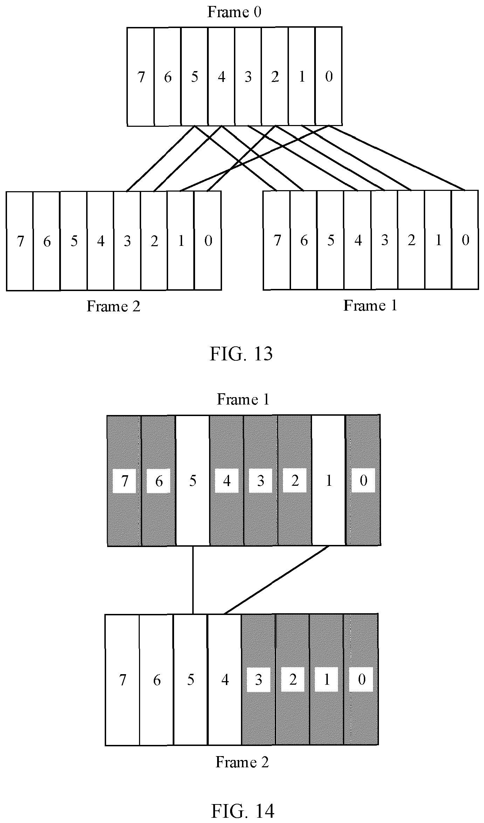

In a specific implementation, as shown in FIG. 13, N = 3 means that there are three frames of point clouds: a 0^{th} frame of point cloud, a first frame of point cloud, and a second frame of point cloud. Patch data of each frame of point cloud in the three frames of point clouds includes eight patches. First, a 0^{th} frame of point cloud is determined as a first reference frame, and then patches in a patch set of the first reference frame are stored in eight candidate global matched patch sets, that is, each candidate global matched patch set includes one patch. In this case, the eight candidate global matched patch sets may be expressed as:
globalpatchset[0]: globalpatch<0,0>;
globalpatchset[1]: globalpatch<0,1>;
globalpatchset[2]: globalpatch<0,2>;
globalpatchset[3]: globalpatch<0,3>;
globalpatchset[4]: globalpatch<0,4>;
globalpatchset[5]: globalpatch<0,5>;
globalpatchset[6]: globalpatch<0,6>; and
globalpatchset[7]: globalpatch<0,7>.

It should be noted that the foregoing process is the first iteration process, that is, S₁ = 8.

It should be noted that, globalpatch<i,z> indicates a z^{th} patch in a patch set of an i^{th} frame of point cloud. For example, globalpatch<2,4> indicates a patch 4 in a patch set of the second frame of point cloud, and globalpatch<1,0> indicates a patch 0 in a patch set of the first frame of point cloud. Before patches in patch sets of the three frames of point clouds are processed, a state identifier of each patch in each frame of point cloud in the three frames of point clouds is a first identifier (for example, false or 0) and/or a target index of each patch is a default value.

Then, a matching operation is performed on the patches in the patch set of the first reference frame and eight patches in the patch set of the first frame of point cloud and a matching operation is performed on the patches in the patch set of the first reference frame and eight patches in the patch set of the second frame of point cloud. As shown in FIG. 13, it is determined that a patch 0 (globalpatch<0,0> in the candidate global matched patch set 0) in the patch set of the first reference frame matches both globalpatch <1,0> and globalpatch <2,1>, globalpatch<1,0> and globalpatch<2,1> are stored in the candidate global matched patch set 0, and a state identifier of globalpatch<1,0> and a state identifier of globalpatch<2,1> are both set to a second identifier (for example, true or 1) and/or a target index of globalpatch<1,0> and a target index of globalpatch<2,1> are set to an index of globalpatch<0,0> (for example, 0). It is determined that a patch 1 (globalpatch<0,1> in the candidate global matched patch set 0) in the patch set of the first reference frame matches globalpatch<1,2>, globalpatch <1,2> is stored in the candidate global matched patch set 1, and a state identifier of globalpatch<1,2> is set to the second identifier (for example, true or 1) and/or a target index of globalpatch<1,2> is set to an index (for example, 1) of globalpatch<0,1>. It is determined that a patch 2 (globalpatch<0,2> in the candidate global matched patch set 2) in the patch set of the first reference frame matches both globalpatch<1,3> and globalpatch<2,0>, globalpatch<1,3> and globalpatch<2,0> are stored in the candidate global matched patch set 2, and a state identifier of globalpatch<1,3> and a state identifier of globalpatch<2,0> are set to the second identifier (for example, true or 1) and/or a target index of globalpatch<1,3> and a target index of globalpatch<2,0> are set to an index of globalpatch<0,2> (for example, 2). It is determined that a patch 3 (globalpatch<0,3> in the candidate global matched patch set 3) matches globalpatch<1,4> in the patch set of the first reference frame, globalpatch<1,4> is stored in the candidate global matched patch set 3, and a state identifier of globalpatch<1,4> is set to the second identifier (for example, true or 1) and/or a target index of globalpatch<1,4> is set to an index (for example, 3) of globalpatch<0,3>. It is determined that a patch 4 (that is, globalpatch<0,4> in a candidate global matched patch set 4) in the patch set of the first reference frame matches both globalpatch<1,6> and globalpatch<2,2>, globalpatch<1,6> and globalpatch<2,2> are stored in the candidate global matched patch set 4, and a state identifier of globalpatch<1,6> and a state identifier of globalpatch<2,2> are set to the second identifier (for example, true or 1) and/or a target index of globalpatch<1,6> and a target index of globalpatch<2,2> are set to an index of globalpatch<0,4> (for example, 4). It is determined that a patch 5 (that is, globalpatch<0,5> in the candidate global matching set 5) in the patch set of the first reference frame matches both globalpatch <1,7> and globalpatch <2,3>; and globalpatch<1,7> and globalpatch<2,3> are stored in the candidate global matched patch set 5, and a state identifier of globalpatch<1,7> and a state identifier of globalpatch<2,3> are set to the second identifier (for example, true or 1) and/or a target index of globalpatch<1,7> and a target index of globalpatch<2,3> are to an index of globalpatch<0,5> (for example, 5). It is determined that a patch 6 (that is, globalpatch<0,6> in the candidate global matched patch set 6) and a patch 7 (that is, globalpatch<0,7> in the candidate global matched patch set 7) in the patch set of the first reference frame matches neither an unmatched patch in the patch set of the first frame of point cloud nor an unmatched patch in the patch set of the second frame of point cloud.

In this case, the eight candidate global matched patch sets may be expressed as:
globalpatchset[0]: globalpatch<0,0>, globalpatch<1,0>, globalpatch<2,1>;
globalpatchset[1]: globalpatch<0,1>, globalpatch<1,2>;
globalpatchset[2]: globalpatch<0,2>, globalpatch<1,3>, globalpatch<2,0>;
globalpatchset[3]: globalpatch<0,3>, globalpatch<1,4>;
globalpatchset[4]: globalpatch<0,4>, globalpatch<1,6>, globalpatch<2,2>;
globalpatchset[5]: globalpatch<0,5>, globalpatch<1,7>, globalpatch<2,3>;
globalpatchset[6]: globalpatch<0,6>; and
globalpatchset[7]: globalpatch<0,7>.

It should be noted that the foregoing process is the second iteration process, that is, S₂ = 8.

In an implementation, a plurality of global matched patch sets are obtained from the foregoing eight candidate global matched patch sets based on a first threshold, and a quantity of patches in each global matched patch set is greater than or equal to the first threshold. Assuming that the first threshold is 2, global matched patch sets determined from the eight candidate global matched patch sets are:
globalpatchset[0]: globalpatch<0,0>, globalpatch<1,0>, globalpatch<2,1>;
globalpatchset[1]: globalpatch<0,1>, globalpatch<1,2>;
globalpatchset[2]: globalpatch<0,2>, globalpatch<1,3>, globalpatch<2,0>;
globalpatchset[3]: globalpatch<0,3>, globalpatch<1,4>;
globalpatchset[4]: globalpatch<0,4>, globalpatch<1,6>, globalpatch<2,2>; and
globalpatchset[5]: globalpatch<0,5>, globalpatch<1,7>, globalpatch<2,3>.

Both the candidate global matched patch set 1 and the candidate global matched patch set 3 are both sets of patches that have a matching relationship across two frames of point clouds. The candidate global matched patch set 0, the candidate global matched patch set 2, the candidate global matched patch set 4, and the candidate global matched patch set 5 all are sets of patches that have a matching relationship across three frames of point clouds.

Assuming that the first threshold is 3, global matched patch sets determined based on the first threshold 3 from the foregoing eight candidate global matched patch sets may be expressed as:
globalpatchset[0]: globalpatch<0,0>, globalpatch<1,0>, globalpatch<2,1>;
globalpatchset[2]: globalpatch<0,2>, globalpatch<1,3>, globalpatch<2,0>;
globalpatchset[4]: globalpatch<0,4>, globalpatch<1,6>, globalpatch<2,2>; and
globalpatchset[5]: globalpatch<0,5>, globalpatch<1,7>, globalpatch<2,3>.

In an implementation, as shown in FIG. 14, there are unmatched patches (whether a patch is an unmatched patch may be based on a state identifier or a target index of the patch, where a patch represented by a gray block is a matched patch and a patch represented by a white block is an unmatched patch) in both a patch set of a first frame of point cloud and a patch set of a second frame of point cloud. The unmatched patches in the patch set of the first frame of point cloud include globalpatch<1,1> and globalpatch<1,5>, and the unmatched patches in the patch set of the second frame of point cloud include globalpatch<2,4>, globalpatch<2,5>, globalpatch<2,6>, and globalpatch<2,7>. Then, the first frame of point cloud is used as a second reference frame, globalpatch<1,1> and globalpatch<1,5> in a patch set of the second reference frame are stored in two added candidate global matched patch sets (a candidate global matched patch set 8 and a candidate global matched patch set 9). In this case, the two added candidate global matched patch sets may be expressed as:
globalpatchset[8]: globalpatch<1,1>; and
globalpatchset[9]: globalpatch<1,5>.

Next, a matching operation is performed on a patch 1 (that is, globalpatch<1,1> in the candidate global matched patch set 8) in the patch set of the second reference frame and the unmatched patches in the patch set of the second frame of point cloud, and a matching operation is performed on a patch 5 (that is, globalpatch<1,5> in the candidate global matched patch set 9) in the patch set of the second reference frame and the unmatched patches in the patch set of the second frame of point cloud. In this case, as shown in FIG. 14, if globalpatch<1,1> in the candidate global matched patch set 8 matches globalpatch<2,4>, globalpatch<2,4> is stored in the candidate global matched patch set 8, and a state identifier of globalpatch<2,4> is set to the second identifier (for example, true or 1) and/or a target index of globalpatch<2,4> is set to an index (for example, 1) of globalpatch<1,1>. If globalpatch<1,5> in the candidate global matched patch set 9 matches globalpatch<2,5>, globalpatch<2,5> is stored in the candidate global matched patch set 9, and a state identifier of globalpatch<2,5> is set to the second identifier (for example, true or 1) and/or a target index of globalpatch<2,5> is set to an index (for example, 3) of globalpatch<1,5>. In this case, there is no unmatched patch in the patch set of the first frame of point cloud.

In this case, the candidate global matched patch set 8 and the candidate global matched patch set 9 are as follows:
globalpatchset[8]: globalpatch<1,1>, globalpatch<2,4>; and
globalpatchset[9]: globalpatch<1,5>, globalpatch<2,5>.

It should be noted that, the foregoing process is the third iteration process, that is, S₃ = S₂ + 2 = 10. In other words, 10 candidate global matched patch sets are obtained through the three iteration processes. The 10 candidate global matched patch sets may be expressed as:
globalpatchset[0]: globalpatch<0,0>, globalpatch<1,0>, globalpatch<2,1>;
globalpatchset[1]: globalpatch<0,1>, globalpatch<1,2>;
globalpatchset[2]: globalpatch<0,2>, globalpatch<1,3>, globalpatch<2,0>;
globalpatchset[3]: globalpatch<0,3>, globalpatch<1,4>;
globalpatchset[4]: globalpatch<0,4>, globalpatch<1,6>, globalpatch<2,2>;
globalpatchset[5]: globalpatch<0,5>, globalpatch<1,7>, globalpatch<2,3>;
globalpatchset[6]: globalpatch<0,6>;
globalpatchset[7]: globalpatch<0,7>;
globalpatchset[8]: globalpatch<1,1>, globalpatch<2,4>; and
globalpatchset[9]: globalpatch<1,5>, globalpatch<2,5>.

Then, a plurality of global matched patch sets are obtained from the foregoing 10 candidate global matched patch sets based on the second threshold. Specifically, a candidate global matched patch set in which a quantity of patches is greater than or equal to the second threshold is selected, as the global matched patch set, from the 10 candidate global matched patch sets based on the second threshold.

Assuming that the second threshold is 2, eight candidate global matched patch sets in the 10 candidate global matched patch sets meet the foregoing condition, and the eight candidate global matched patch sets may be expressed as:
globalpatchset[0]: globalpatch<0,0>, globalpatch<1,0>, globalpatch<2,1>;
globalpatchset[1]: globalpatch<0,1>, globalpatch<1,2>;
globalpatchset[2]: globalpatch<0,2>, globalpatch<1,3>, globalpatch<2,0>;
globalpatchset[3]: globalpatch<0,3>, globalpatch<1,4>;
globalpatchset[4]: globalpatch<0,4>, globalpatch<1,6>, globalpatch<2,2>;
globalpatchset[5]: globalpatch<0,5>, globalpatch<1,7>, globalpatch<2,3>;
globalpatchset[8]: globalpatch<1,1>, globalpatch<2,4>; and
globalpatchset[9]: globalpatch<1,5>, globalpatch<2,5>.

Actually, the candidate global matched patch sets 1, 3, 8 and 9 in the foregoing eight candidate global matched patch sets all are sets of patches that have a matching relationship across two frames of point clouds. A purpose of keeping the sets of patches that have a matching relationship across the two frames of point clouds is that, same or similar spatial locations can be allocated for patches in the local matched set during subsequent packing. This can improve subsequent coding efficiency to some extent.

Assuming that the second threshold is 3, four candidate global matched patch sets in the 10 candidate global matched patch sets meet the foregoing condition, and the four candidate global matched patch sets may be expressed as:
globalpatchset[0]: globalpatch<0,0>, globalpatch<1,0>, globalpatch<2,1>;
globalpatchset[2]: globalpatch<0,2>, globalpatch<1,3>, globalpatch<2,0>;
globalpatchset[4]: globalpatch<0,4>, globalpatch<1,6>, globalpatch<2,2>; and
globalpatchset[5]: globalpatch<0,5>, globalpatch<1,7>, globalpatch<2,3>.

The four candidate global matched patch sets all are sets of patches that have a matching relationship across three frames of point clouds.

It can be learned that, according to the solution in the implementations of this application, after global matched patches of the N frames of point clouds are obtained, during packing, a global matched patch in each frame of point cloud is preferably packed, and a non-global matched patch is then packed, to obtain an occupancy map of each frame of point cloud of the N frames of point clouds. Because the global matched patches of all the N frames of point clouds are allocated with same or similar locations during packing, the global matched patches in generated occupancy maps in all the frames are spatially consistent. This improves coding efficiency of occupancy maps, depth maps, and texture maps in subsequent coding.

In a possible implementation, this implementation of this application further provides another method for obtaining a global matched patch, including:
obtaining matched patch sets of N frames of point clouds, where N is an integer greater than or equal to 2, side information of one patch R in a matched patch set of each frame of point cloud includes a first index and a second index, the first index is an index of a patch that has a matching relationship with the patch R and that is in a matched patch set of a previous frame of a current frame, and the second index is an index of a patch that has a matching relationship with the patch R and that is in a matched patch set of a next frame of the current frame;
traversing matched patch sets of N-2 frames of point clouds, and determining whether at least one of a first index and a second index of each patch in a matched patch set of each frame of point cloud is a preset value, and the N-2 frames of point clouds are point clouds other than a 0^{th} frame of point cloud and an (N-1)^{th} frame of point cloud in the N frames of point clouds; and
when at least one of a first index and a second index of a y^{th} patch in a matched patch set of an x^{th} frame of point cloud is equal to a preset value, deleting a patch that has a matching relationship with the y^{th} patch from a matched patch set of the 0^{th} frame of point cloud to an (x-1)^{th} frame of point cloud, and deleting the y^{th} patch from a patch set of the (x-1)^{th} frame of point cloud, to obtain a set of global matched patches, where
a patch in the global matched patch set is a patch that has a matching relationship across the N frames of point clouds.

For example, as shown in FIG. 14, it is assumed that N = 4, that is, there are four frames of point clouds, and a matched patch set of each frame of point cloud includes six patches, and the preset value is -1.

It should be noted that frame[x].matchedPatch[y].preBestMatchedIndex indicates an index of a patch, in a matched patch set of a previous frame of point cloud of an x^{th} frame of point cloud, that has a matching relationship with a y^{th} patch in the matched patch set of the x^{th} frame of point cloud, that is, the first index of the y^{th} patch in the matched patch set of the x^{th} frame of point cloud; and frame[x]. matchedPatch[y].nextBestMatchedIndex indicates an index of a patch, in a matched patch set of a next frame of point cloud of the x^{th} frame of point cloud, that has a matching relationship with the y^{th} patch in the matched patch set of the x^{th} frame of point cloud, that is, the second index of the y^{th} patch in the matched patch set of the x^{th} frame of point cloud.

When frame[x].matchedPatch[y].preBestMatchedIndex is -1, it indicates that there is no patch, in the matched patch set of the previous frame of point cloud of the x^{th} frame of point cloud, that matches the y^{th} patch in the matched patch set of the x^{th} frame of point cloud. When frame[x].matchedPatch[y].nextBestMatchedIndex is -1, it indicates that there is no patch, in the matched patch set of the next frame of point cloud of the x^{th} frame of point cloud, that matches the y^{th} patch in the matched patch set of the x^{th} frame of point cloud.

A previous frame of point cloud of a first frame of point cloud is a 0^{th} frame of point cloud, and a next frame of point cloud of the first frame of point cloud is a second frame of point cloud. A matched patch set of the first frame of point cloud is traversed, and whether at least one of frame[1].matchedPatch[y].preBestMatchedIndex and frame[1]. matchedPatch[y].nextBestMatchedIndex is -1 is determined, where j = 1, 2, 3, 4, 5. It is determined that both frame[1].matchedPatch[1].nextBestMatchedIndex and frame[1].matchedPatch[5].nextBestMatched Index are - 1 (that is, there are no patches, in a matched patch set of the second frame of point cloud, that match a patch 1 and a patch 5 in the matched patch set of the first frame of point cloud). Because a patch 0 and a patch 5 in the matched patch set of the 0^{th} frame of point cloud respectively match a patch 1 and a patch 5 in the matched patch set of the first frame of point cloud, the patch 0 and the patch 5 are deleted from the matched patch set of the 0^{th} frame of point cloud, and the patch 1 and the patch 5 are deleted from the matched patch set of the first frame of point cloud.

A previous frame of point cloud of a second frame of point cloud is the first frame of point cloud, and a next frame of point cloud of the second frame of point cloud is a third frame of point cloud. The matched patch set of the second frame of point cloud is traversed, and whether at least one of frame[2].matchedPatch[y].preBestMatchedIndex and frame[2]. matchedPatch[y].nextBestMatchedIndex is -1 is determined. It is determined that both frame[2]. matchedPatch[1].preBestMatchedIndex and frame[2].matchedPatch[2].preBestMatchedIndex are -1 (that is, there are no patches, in the matched patch set of the first frame of point cloud, that match a patch 1 and a patch 2 in the second frame of point cloud). Because a patch 0 and a patch 3 in a matched patch set of the third frame of point cloud respectively match a patch 1 and a patch 2 in a matched patch set of the second frame of point cloud, the patch 1 and the patch 2 in the matched patch set of the second frame of point cloud are deleted from the matched patch set of the second frame of point cloud, and the patch 0 and the patch 3 in the matched patch set of the third frame of point cloud are deleted from the matched patch set of the third frame of point cloud. It is determined that frame[2].matchedPatch[5].nextBestMatchedIndex is -1 (that is, there is no patch, in the matched patch set of the third frame of point cloud, that matches a patch 5 in the matched patch set of the second frame of point cloud). Because both a patch 4 in the matched patch set of the 0^{th} frame of point cloud and a patch 4 in the matched patch set of the second frame of point cloud match the patch 5 in the matched patch set of the second frame of point cloud, the patch 4 in the matched patch set of the 0^{th} frame of point cloud, the patch 4 in the matched patch set of the second frame of point cloud, and the patch 5 in the matched patch set of the second frame of point cloud are deleted from the corresponding matched patch sets.

In this case, the matched patch set of the 0^{th} frame of point cloud includes a patch 1, a patch 2, and a patch 3; the matched patch set of the first frame of point cloud includes a patch 0, a patch 2, and a patch 3; the matched patch set of the second frame of point cloud includes a patch 0, a patch 3, and a patch 4; and the matched patch set of the 3^{rd} frame of point cloud includes a patch 2, a patch 4, and a patch 5.

In a possible implementation, a first index of a patch R is an index of a patch, in a matched patch set of a t^{th} frame of point cloud, that has a matching relationship with the patch R; and a second index of the patch R is an index of a patch, in a matched patch set of a t'th frame of point cloud, that has a matching relationship with the patch R. The patch R is one patch in the matched patch set of the x^{th} frame of point cloud. The t^{th} frame of point cloud, the x^{th} frame of point cloud, and the t'^{th} frame of point cloud are three frames of consecutively processed point clouds, the t^{th} frame of point cloud is processed before the x^{th} frame of point cloud, and the x^{th} frame of point cloud is processed before the t'^{th} frame of point cloud.

It can be learned that, according to the solution in the implementations of this application, after global matched patches of the N frames of point clouds are obtained, during packing, a global matched patch in each frame of point cloud is preferably packed, and a non-global matched patch is then packed, to obtain an occupancy map of each frame of point cloud of the N frames of point clouds. Because the global matched patches of all the N frames of point clouds are allocated with same or similar locations during packing, the global matched patches in generated occupancy maps in all the frames are spatially consistent. This improves coding efficiency of occupancy maps, depth maps, and texture maps in subsequent coding.

The foregoing mainly describes the solutions provided in the implementations of this application from a perspective of the method. To implement the foregoing functions, the data processing method includes corresponding hardware structures and/or software modules for performing the functions. A person skilled in the art should easily be aware that, in combination with units and algorithm steps of the examples described in the implementations disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application.

In the implementations of this application, an apparatus for obtaining a global matched patch may be divided into function modules based on the foregoing method examples. For example, function modules may be obtained through division based on corresponding functions, or two or more functions may be integrated into one processing module. The integrated module may be implemented in a form of hardware, or may be implemented in a form of a software functional module. It should be noted that, in the implementation of this application, module division is an example, and is merely a logical function division. In actual implementation, another division manner may be used.

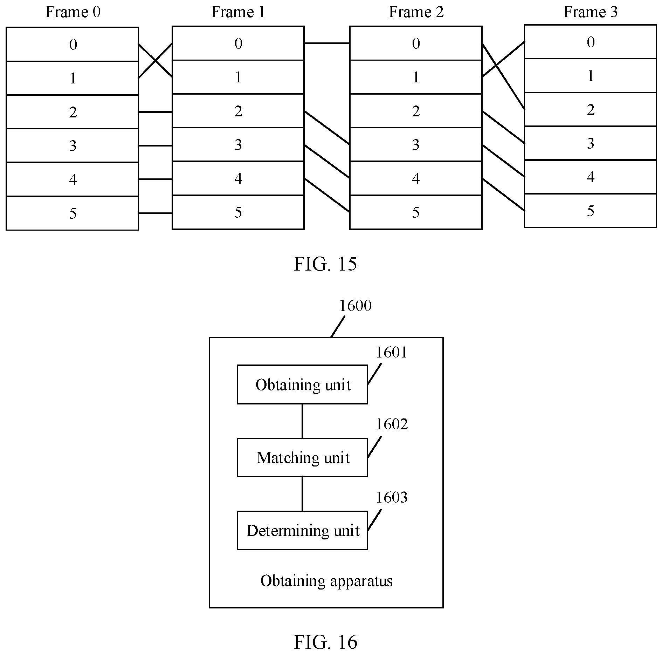

FIG. 16 is a schematic structural diagram of an apparatus for obtaining a global matched patch according to an implementation of this application. As shown in FIG. 16, the obtaining apparatus 1600 includes:
an obtaining unit 1601, configured to obtain patch sets of N frames of point clouds, where N is an integer greater than or equal to 2;
a matching unit 1602, configured to perform a matching operation on one or more patches in a matched patch set of a reference frame of an i^{th} frame of point cloud in the N frames of point clouds and one or more unmatched patches in a patch set of the i^{th} frame of point cloud, to obtain a matched patch set of the i^{th} frame of point cloud, where the matched patch set of the i^{th} frame of point cloud includes n patches, one of the n patches has a matching relationship with a patch in the matched patch set of the reference frame of the i^{th} frame of point cloud, and n is an integer greater than or equal to 0; and
a determining unit 1603, configured to determine M global matched patch sets based on matched patch sets of the N frames of point clouds, where at least one of the M global matched patch sets is a set of patches that have a matching relationship across N1 frames of point clouds, M is an integer greater than 0, and the N1 frames of point clouds are all or some frames of point clouds in the N frames of point clouds.

In a possible implementation, M is less than or equal to P, and P represents a quantity of patches in a matched patch set that includes a minimum quantity of matched patches in N matched patch sets.

In a possible implementation, the matching unit 1602 is specifically configured to: traverse the matched patch set of the reference frame of the i^{th} frame of point cloud, and perform a matching operation on a t1^{th} patch in the matched patch set of the reference frame and a w1^{th} patch in the patch set of the i^{th} frame of point cloud; and when the t1^{th} patch matches the w1^{th} patch, store the w1^{th} patch in the matched patch set of the i^{th} frame of point cloud, where a target index of the w1^{th} patch is an index of the t1^{th} patch, and the w1^{th} patch is an unmatched patch in the patch set of the i^{th} frame of point cloud.

In a possible implementation, the determining unit 1603 is specifically configured to: traverse the matched patch set of the reference frame of the i^{th} frame of point cloud, and determine whether the index of the t1^{th} patch is the same as the target index of the w1^{th} patch, where i = {N-1, N-2, ..., 1};
when the index of the t1^{th} patch is different from any of target indexes of all patches in the matched patch set of the i^{th} frame of point cloud, delete the t1^{th} patch from the matched patch set of the reference frame; and
when i is equal to 1, obtaining the M global matched patch sets, where an m^{th} set in the M global matched patch sets includes an m^{th} processed patch in each of matched patch sets in a 0^{th} frame to an (N-2)^{th} frame and an m^{th} processed patch in a matched patch set of an (N-1)^{th} frame.

It should be noted that, the obtaining unit 1601 is configured to perform related content of step S601 in the implementation shown in FIG. 6, the matching unit 1602 is configured to perform related content of step S602 in the implementation shown in FIG. 6, and the determining unit 1603 is configured to perform related content of step S603 in the implementation shown in FIG. 6. In an example, a location of the obtaining apparatus 1600 corresponds to the packing module 102 in FIG. 2. In other words, functions of the obtaining unit 1601, the matching unit 1602, and the determining unit 1603 can be implemented by the packing module 102 in FIG. 2. Certainly, this application is not limited thereto.

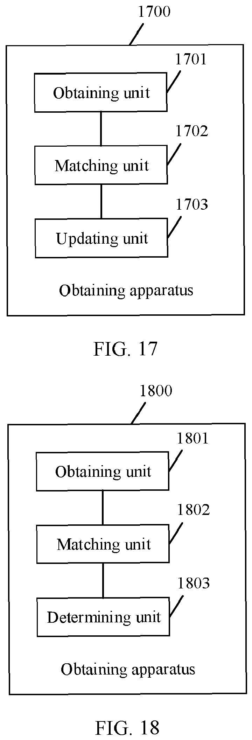

FIG. 17 is a schematic structural diagram of an apparatus for obtaining a global matched patch according to an implementation of this application. As shown in FIG. 17, the obtaining apparatus 1700 includes:
an obtaining unit 1701, configured to obtain patch sets of N frames of point clouds, where N is an integer greater than or equal to 2;
a matching unit 1702, configured to perform a matching operation on a t2^{th} patch in a matched patch set of a reference frame of a j^{th} frame of point cloud in the N frames of point clouds and a w2^{th} patch in a patch set of the j^{th} frame of point cloud, where the w2^{th} patch is an unmatched patch in the patch set of the j^{th} frame of point cloud; and
a deletion unit 1703, configured to: when the t2^{th} patch does not match any unmatched patch in the patch set of the j^{th} frame of point cloud, delete, from respective matched patch sets of W frames of point clouds, a patch that has a matching relationship with the t2^{th} patch and that is in the matched patch sets of the W frames of point clouds; and delete the t2^{th} patch from the matched patch set of the reference frame; and
after the N frames of point clouds are processed, obtain M global matched patch sets, where one of the M global matched patch sets is a set of patches that have a matching relationship across the N frames of point clouds.

In a possible implementation, the matching unit 1702 is further configured to: when the t2^{th} patch matches the w2^{th} patch, store the w2^{th} patch in a matched patch set of the j^{th} frame of point cloud.

It should be noted that, the obtaining unit 1701, the matching unit 1702, and the deletion unit 1703 perform related content in the implementation shown in FIG. 9. In an example, a location of the obtaining apparatus 1700 corresponds to the packing module 102 in FIG. 2. In other words, functions of the obtaining unit 1701, the matching unit 1702, and the deletion unit 1703 can be implemented by the packing module 102 in FIG. 2. Certainly, this application is not limited thereto.

FIG. 18 is a schematic structural diagram of an apparatus for obtaining a global matched patch according to an implementation of this application. As shown in FIG. 18, the obtaining apparatus 1800 includes:
an obtaining unit 1801, configured to obtain patch sets of N frames of point clouds, where N is an integer greater than or equal to 2;
a matching unit 1802, configured to perform a matching operation on a patch in s_{q-1} candidate global matched patch sets and an unmatched patch in a patch set of a q^{th} frame of point cloud, to obtain s_{q} candidate global matched patch sets, where at least one of the s_{q} candidate global matched patch sets is a set of patches that have a matching relationship across N1 frames of point clouds, the N1 frames of point clouds are all or some frames of point clouds in the N frames of point clouds, and q = {1, 2, ..., N-1}; and
a determining unit 1803, further configured to: after processing the N frames of point clouds, obtain M global matched patch sets based on s_{N-1} candidate global matched patch sets, where one of the M global matched patch sets is a set of patches that have a matching relationship across N2 frames of point clouds, M is an integer less than or equal to s_{N-1}, and the N2 frames of point clouds are some or all frames of point clouds in the N frames of point clouds.

In a possible implementation, the matching unit 1802 is specifically configured to: traverse the s_{q-1} candidate global matched patch sets, and perform a matching operation on one or more patches in a k^{th} candidate global matched patch set and a w3^{th} patch in the patch set of the q^{th} frame of point cloud, where the w3^{th} patch is an unmatched patch in the patch set of the q^{th} frame of point cloud; and
when a t3^{th} patch matches the w3^{th} patch, store the w3^{th} patch in the k^{th} candidate global matched patch set, where the k^{th} candidate global matched patch set is included in the s_{q} candidate global matched patch sets, and the 13^{th} patch is any one of the one or more patches.

In a possible implementation, the matching unit 1802 is further configured to: when the one or more patches in the k^{th} candidate global matched patch set do not match any unmatched patch in the patch set of the q^{th} frame of point cloud, clear the k^{th} candidate global matched patch set.

In a possible implementation, the matching unit 1802 is further configured to: when the one or more patches in the k^{th} candidate global matched patch set do not match any unmatched patch in the patch set of the q^{th} frame of point cloud, delete the k^{th} candidate global matched patch set.

In a possible implementation, the matching unit 1802 is further configured to: after the matching operation is performed on the patch in the s_{q-1} candidate global matched patch sets and the unmatched patch in the patch set of the q^{th} frame of point cloud, if there are still d unmatched patches in the patch set of the q^{th} frame of point cloud, add d candidate global matched patch sets, and store the d unmatched patches in the added d candidate global matched patch sets, where the s_{q} candidate global matched patch sets include the added d candidate global matched patch sets and the s_{q-1} candidate global matched patch sets.

In a possible implementation, the determining unit 1803 is specifically configured to: determine the s_{N-1} candidate global matched patch sets as the M global matched patch sets; or determine, as the M global matched patch sets, candidate global matched patch sets each in which a quantity of patches is greater than or equal to a first threshold in the s_{N-1} candidate global matched patch sets.

It should be noted that, the obtaining unit 1801 is configured to perform related content of step S1001 in the implementation shown in FIG. 10, the matching unit 1802 is configured to perform related content of step S1002 in the implementation shown in FIG. 10, and the determining unit 1803 is configured to perform related content of step S1003 in the implementation shown in FIG. 10. In an example, a location of the obtaining apparatus 1800 corresponds to the packing module 102 in FIG. 2. In other words, functions of the obtaining unit 1801, the matching unit 1802, and the determining unit 1803 can be implemented by the packing module 102 in FIG. 2. Certainly, this application is not limited thereto.

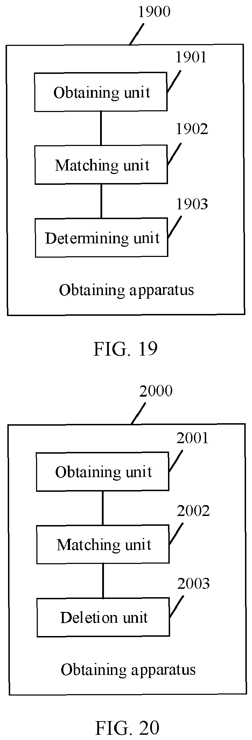

FIG. 19 is a schematic structural diagram of an apparatus for obtaining a global matched patch according to an implementation of this application. As shown in FIG. 19, the obtaining apparatus 1900 includes:
an obtaining unit 1901, configured to obtain patch sets of N frames of point clouds, where N is an integer greater than or equal to 2;
a matching unit 1902, configured to: select one frame of point cloud from N_{g} frames of point clouds as a reference frame, where the N_{g} frames of point clouds are some or all frames of point clouds in the N frames of point clouds; and perform a matching operation on an unmatched patch in a patch set of the reference frame and an unmatched patch in patch sets of all or some frames in N_{g}-1 frames of point clouds, to obtain S_{g} candidate global matched patch sets, where the N_{g}-1 frames of point clouds are point clouds other than the reference frame in the N_{g} frames of point clouds, the candidate global matched patch set is a set of patches that have a matching relationship across N_{g}' frames of point clouds, S_{g} is greater than or equal to S_{g-1}, S_{g} and S_{g-1} are respectively a quantity of candidate global matched patch sets obtained after g iterations and a quantity of candidate global matched patch sets obtained after g-1 iterations, and the N_{g}' frames of point clouds are some or all frames of point clouds in the N_{g} frames of point clouds; and
a determining unit 1903, configured to determine M global matched patch sets from the S_{g} candidate global matched patch sets, where at least one of the M global matched patch sets is a set of patches that have a matching relationship across N' frames of point clouds, M is an integer less than or equal to S_{g}, a value of g ranges from 1 to N-2, and the N' frames of point clouds are some or all of the N frames of point clouds.

In a possible implementation, the matching unit 1902 is specifically configured to: traverse the patch set of the reference frame, and perform a matching operation on a w4^{th} patch in the patch set of the reference frame and a t4^{th} patch in a patch set of a p^{th} frame of point cloud, where the t4^{th} patch is an unmatched patch in the patch set of the p^{th} frame of point cloud, and the w4^{th} patch is an unmatched patch in the patch set of the reference frame; and
when the w4^{th} patch matches the t4^{th} patch, store the t4^{th} patch in a candidate global matched patch set to which the w4^{th} patch belongs, where the S_{g} candidate global matched patch sets include the candidate global matched patch set to which the w4^{th} patch belongs, where the p^{th} frame of point cloud is one frame of point cloud in all or some frames of point clouds in the N_{g}-1 frames of point clouds.

In a possible implementation, the determining unit 1903 is specifically configured to determine, as the M global matched patch sets, candidate global matched patch sets each in which a quantity of patches is greater than or equal to a second threshold in the S_{g} candidate global matched patch sets.

It should be noted that, the obtaining unit 1901 is configured to perform related content of step S1201 in the implementation shown in FIG. 12, the matching unit 1902 is configured to perform related content of step S1202 in the implementation shown in FIG. 12, and the determining unit 1903 is configured to perform related content of step S1203 in the implementation shown in FIG. 12. In an example, a location of the obtaining apparatus 1900 corresponds to the packing module 102 in FIG. 2. In other words, functions of the obtaining unit 1901, the matching unit 1902, and the determining unit 1903 can be implemented by the packing module 102 in FIG. 2. Certainly, this application is not limited thereto.

FIG. 20 is a schematic structural diagram of an apparatus for obtaining a global matched patch according to an implementation of this application. As shown in FIG. 20, the obtaining apparatus 2000 includes:
an obtaining unit 2001, configured to obtain matched patch sets of N frames of point clouds, where N is an integer greater than or equal to 2, side information of one patch R in a matched patch set of each frame of point cloud includes a first index and a second index, the first index is an index of a patch that has a matching relationship with the patch R and that is in a matched patch set of a previous frame of a current frame, and the second index is an index of a patch that has a matching relationship with the patch R and that is in a matched patch set of a next frame of the current frame;
a matching unit 2002, configured to traverse matched patch sets of the N-2 frames of point clouds, and determine whether at least one of a first index and a second index of each patch in a matched patch set of each frame of point cloud is a preset value, and the N-2 frames of point clouds are point clouds other than a 0^{th} frame of point cloud and an (N-1)^{th} frame of point cloud in the N frames of point clouds; and
a deletion unit 2003, configured to: when at least one of a first index and a second index of a y^{th} patch in a matched patch set of an x^{th} frame of point cloud is equal to a preset value, delete a patch that has a matching relationship with the y^{th} patch from a matched patch set of the 0^{th} frame of point cloud to an (x-1)^{th} frame of point cloud, and delete the y^{th} patch from a patch set of the (x-1)^{th} frame of point cloud, to obtain a set of global matched patches, where
a patch in the global matched patch set is a patch that has a matching relationship across the N frames of point clouds.

It should be noted that, the obtaining unit 2001, the matching unit 2002, and the deletion unit 2003 perform related content in the implementation shown in FIG. 15. In an example, a location of the obtaining apparatus 2000 corresponds to the packing module 102 in FIG. 2. In other words, functions of the obtaining unit 2001, the matching unit 2002, and the deletion unit 2003 can be implemented by the packing module 102 in FIG. 2. Certainly, this application is not limited thereto.

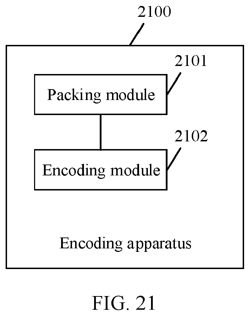

FIG. 21 is a schematic structural diagram of an encoding apparatus according to an implementation of this application. As shown in FIG. 21, the encoding apparatus 2100 includes:
a packing module 2101, configured to: obtain global matched patches in N frames of point clouds based on any one of the implementations shown in FIG. 6 to FIG. 15; and during packing, preferably pack global matched patches in each frame of point cloud in N frames of point cloud, and then pack a non-global matched patch, to obtain an occupancy map of each frame of point cloud of the N frames of point clouds; and
an encoding module 2102, configured to obtain a bitstream for occupancy maps of the N frames of point clouds based on an occupancy map of each frame of point cloud of the N frames of point clouds.

Specifically, the encoding module 2102 first performs filling on the occupancy map of each frame of point cloud of the N frames of point clouds, to obtain an occupancy map obtained through filling, and then encodes the filled occupancy map, to obtain the bitstream of the occupancy maps of the N frames of point clouds.

It should be noted that, a location of the packing module 2101 corresponds to the packing module 102 in FIG. 2. In other words, functions of the packing module 2101 can be implemented by the packing module 102 in FIG. 2.

Correspondingly, the encoding module 2102 may correspond to a combination of one or more modules in FIG. 2. For example, the encoding module 2102 may correspond to modules (for example, the depth map generation module 103, the texture map generation module 104, and the second filling module 111) that receive an occupancy map of a point cloud in FIG. 2 and a module that is connected to or that communicates with the encoding module 2102. Certainly, this application is not limited thereto.

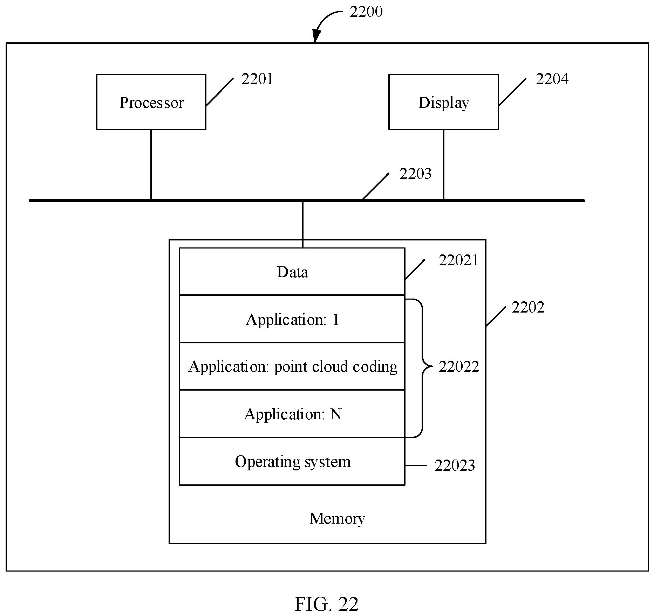

FIG. 22 is a schematic block diagram of an encoding apparatus 2200 according to an implementation of this application. The encoding apparatus 2200 may include a processor 2201, a memory 2202, and a bus system 2203. The processor 2201 and the memory 2202 are connected to each other through the bus system 2203. The memory 2202 is configured to store an instruction, and the processor 2201 is configured to execute the instruction stored in the memory 2202, to perform various point cloud encoding or decoding methods described in this application, and particularly perform a method for obtaining a global matched patch. To avoid repetition, details are not described herein again.

In this implementation of this application, the processor 2201 may be a central processing unit (central processing unit, CPU), or the processor 2201 may be another general-purpose processor, a DSP, an ASIC, an FPGA, another programmable logic device, a discrete gate, a transistor logic device, a discrete hardware component, or the like. The general-purpose processor may be a microprocessor, or the processor may be any conventional processor or the like.

The memory 2202 may include a ROM device or a RAM device. Any other appropriate type of storage device may also be used as the memory 2202. The memory 2202 may include code and data 22021 that are accessed by the processor 2201 through the bus system 2203. The memory 2202 may further include an operating system 22023 and an application program 22022. The application program 22022 includes at least one program that allows the processor 2201 to perform the point cloud encoding or decoding method (especially the method for obtaining a global matched patch described in this application) described in this application. For example, the application program 22022 may include applications 1 to N, and further include a point cloud encoding or decoding application (referred to as a point cloud coding application for short) for performing the point cloud encoding or decoding method described in this application.

The bus system 2203 may further include a power bus, a control bus, a status signal bus, and the like, in addition to a data bus. However, for clear description, various types of buses in the figure are denoted as the bus system 2203.

Optionally, the encoding apparatus 2200 may further include one or more output devices, for example, a display 2204. In an example, the display 2204 may be a touchsensitive display that combines a display and a touch unit that operably senses touch input. The display 2204 may be connected to the processor 2201 through the bus 2203.

A person skilled in the art can understand that, the functions described with reference to various illustrative logical blocks, modules, and algorithm steps disclosed and described in this specification can be implemented by hardware, software, firmware, or any combination thereof. If implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium, which corresponds to a tangible medium such as a data storage medium, or a communications medium including any medium that facilitates transfer of a computer program from one place to another (for example, according to a communications protocol). In this manner, the computer readable medium may be generally corresponding to: (1) a non-transitory tangible computer-readable storage medium, or (2) a communications medium such as a signal or a carrier. The data storage medium may be any available medium that can be accessed by one or more computers or one or more processors to retrieve instructions, code, and/or data structures for implementing the techniques described in this application. A computer program product may include a computer readable medium.

By way of example but not limitation, such computer-readable storage media may include a RAM, a ROM, an EEPROM, a CD-ROM or another compact disc storage apparatus, a magnetic disk storage apparatus or another magnetic storage apparatus, a flash memory, or any other medium that can be used to store desired program code in a form of an instruction or a data structure and that can be accessed by a computer. In addition, any connection is appropriately termed as a computer-readable medium. For example, if an instruction is transmitted from a website, a server, or another remote source through a coaxial cable, an optical fiber, a twisted pair, a digital subscriber line (DSL), or wireless technologies such as infrared, radio, and microwave, the coaxial cable, fiber optic cable, twisted pair, DSL, or wireless technologies such as infrared, radio, and microwave are included in a definition of a medium. However, it should be understood that the computer-readable storage medium and the data storage medium do not include connections, carriers, signals, or other transitory media, but actually mean non-transitory tangible storage media. Disk and disc, as used herein, include a compact disc (CD), a laser disc, an optical disc, a DVD, and a Blu-ray disc, where disks usually reproduce data magnetically, while discs reproduce data optically with lasers. Combinations of the foregoing should also be included in the scope of the computer-readable media.

An instruction may be executed by one or more processors such as one or more digital signal processors (DSP), general purpose microprocessors, application-specific integrated circuits (ASIC), field programmable gate arrays (FPGA), or other equivalent integrated or discrete logic circuits. Therefore, the term "processor" used in this specification may refer to any of the foregoing structures or any other structure suitable for implementing the technologies described in this specification. In addition, in some aspects, the functions described with reference to the various illustrative logical blocks, modules, and steps described in this specification may be provided in dedicated hardware and/or software modules configured for encoding and decoding, or may be incorporated into a combined codec. In addition, the technologies may be completely implemented in one or more circuits or logic elements. In an example, various illustrative logical blocks, units, and modules in the encoder 100 and the decoder 200 may be understood as corresponding circuit devices or logic elements.

The technologies in this application may be implemented in various apparatuses or devices, including a wireless handset, an integrated circuit (IC), or a set of ICs (for example, a chip set). Various components, modules, or units are described in this application to emphasize functional aspects of the apparatuses configured to perform the disclosed technologies, but are not necessarily implemented by different hardware units. Actually, as described above, various units may be combined, in combination with appropriate software and/or firmware, into a codec hardware unit, or be provided by interoperable hardware units (including one or more processors described above).

The scope of protection shall be defined by the appended claims.

## Claims

1. A method for point cloud coding, comprising:
obtaining (S601) patch sets of N frames of a
point cloud, wherein N is an integer greater than 2:
processing one of the frames in the N frames of the point cloud to set a patch set of the frame as a matched patch set;
processing each remaining frames of the point cloud in the N frames of the point cloud by performing (S602), for each i^{th} frame of point cloud, wherein i = {1... N-2, N-1}, a matching operation on one or more patches in a matched patch set of a reference frame of an i^{th} frame of the point cloud in the N frames of the point cloud and one or more unmatched patches in a patch set of the i^{th} frame of the point cloud, to obtain a matched patch set of the i^{th} frame of the point cloud, wherein the matched patch set of the i^{th} frame of the point cloud comprises n patches, each of the n patches matches a patch in the matched patch set of the reference frame of the i^{th} frame of the point cloud, and n is an integer greater than or equal to 0, wherein a reference frame of the i^{th} frame of the point cloud is any one of the N frames of the point cloud that is processed before the i^{th} frame of the point cloud;
determining (S603) M global matched patch sets based on matched patch sets of the N frames of the point cloud, wherein at least one of the M global matched patch sets is a set of patches that match across N1 frames of the point cloud, M is an integer greater than 0, and the N1 frames of the point cloud are all or some frames of the point cloud in the N frames of the point cloud;
packing, for each frame of the point cloud, the global matched patch in the at least one of the M global matched patch sets, followed by packing a non-global matched patch to obtain an occupancy map of each frame of the point cloud of the N frames of the point cloud; and
encoding the occupancy map of each frame of the point cloud of the N frames of the point cloud to obtain a bitstream of occupancy maps of the N frames of the point cloud.

2. The method according to claim 1, wherein M is less than or equal to P, and P represents a quantity of patches in a matched patch set that comprises a minimum quantity of matched patches in the matched patch sets of the N frames of the point cloud.

3. The method according to claim 1 or 2, wherein the performing a matching operation on one or more patches in a matched patch set of a reference frame of an i^{th} frame of the point cloud in the N frames of the point cloud and one or more unmatched patches in a patch set of the i^{th} frame of the point cloud, to obtain a matched patch set of the i^{th} frame of the point cloud comprises:
traversing the matched patch set of the reference frame of the i^{th} frame of the point cloud, and performing a matching operation on a t1^{th} patch in the matched patch set of the reference frame and a w1^{th} patch in the patch set of the i^{th} frame of the point cloud; and
when the t1^{th} patch matches the w1^{th} patch, storing the w1^{th} patch in the matched patch set of the i^{th} frame of the point cloud, wherein a target index of the w1^{th} patch is an index of the t1^{th} patch; wherein
the w1^{th} patch is an unmatched patch in the patch set of the i^{th} frame of the point cloud.

4. The method according to claim 3, wherein the determining M global matched patch sets based on matched patch sets of the N frames of the point cloud comprises:
starting with i=N-1, iteratively performing the following steps until i=1:
selecting the i^{th} frame of the point cloud;
traversing the matched patch set of the reference frame of the i^{th} frame of the point cloud, and determining whether the index of the t1^{th} patch is the same as the target index of the w1^{th} patch;
when the index of the t1^{th} patch is different from any of target indexes of all patches in the matched patch set of the i^{th} frame of the point cloud, deleting the t1^{th} patch from the matched patch set of the reference frame; and
setting i=i-1;
when i is equal to 1, obtaining the M global matched patch sets, wherein an m^{th} set in the M global matched patch sets comprises an m^{th} processed patch in each of matched patch sets of a 0^{th} frame of the point cloud to an (N-2)^{th} frame of the point cloud and an m^{th} processed patch in a matched patch set of an (N-1)^{th} frame of the point cloud.

5. An apparatus for point cloud coding comprising:
an obtaining unit, configured for obtaining patch sets of N frames of a point cloud, wherein N is an integer greater than 2;
a matching unit, configured for processing one of the frames in the N frames of the point cloud to set a patch set of the frame as a matched patch set, and processing each remaining frames of the point cloud in the N frames of the point cloud by performing, for each i^{th} frame of the point cloud, wherein i = {1... N-2, N-1}, a matching operation on one or more patches in a matched patch set of a reference frame of an i^{th} frame of the point cloud in the N frames of the point cloud and one or more unmatched patches in a patch set of the i^{th} frame of the point cloud, to obtain a matched patch set of the i^{th} frame of the point cloud, wherein the matched patch set of the i^{th} frame of the point cloud comprises n patches, each of the n patches matches a patch in the matched patch set of the reference frame of the i^{th} frame of the point cloud, and n is an integer greater than or equal to 0, wherein a reference frame of the i^{th} frame of the point cloud is any one of the N frames of the point cloud that is processed before the i^{th} frame of the point cloud;
a determining unit, configured for determining M global matched patch sets based on matched patch sets of the N frames of the point cloud, wherein at least one of the M global matched patch sets is a set of patches that match across N1 frames of the point cloud, M is an integer greater than 0, and the N1 frames of the point cloud are all or some frames of the point cloud in the N frames of the point cloud;
a packing module, configured for packing, for each frame of the point cloud, the global matched patch in the at least one of the M global matched patch sets, followed by packing a non-global matched patch to obtain an occupancy map of each frame of the point cloud of the N frames of the point cloud; and
an encoding module, configured for encoding the occupancy map of each frame of the point cloud of the N frames of the point cloud to obtain a bitstream of occupancy maps of the N frames of the point clouds.

6. The apparatus according to claim 5, wherein M is less than or equal to P, and P represents a quantity of patches in a matched patch set that comprises a minimum quantity of matched patches in the matched patch sets of the N frames of the point cloud.

7. The apparatus according to claim 5 or 6, wherein the matching unit is configured for performing a matching operation on one or more patches in a matched patch set of a reference frame of an i^{th} frame of the point cloud in the N frames of the point cloud and one or more unmatched patches in a patch set of the i^{th} frame of the point cloud, to obtain a matched patch set of the i^{th} frame of the point cloud by:
traversing the matched patch set of the reference frame of the i^{th} frame of the point cloud, and performing a matching operation on a t1^{th} patch in the matched patch set of the reference frame and a w1^{th} patch in the patch set of the i^{th} frame of the point cloud; and
when the t1^{th} patch matches the w1^{th} patch, storing the w1^{th} patch in the matched patch set of the i^{th} frame of the point cloud, wherein a target index of the w1^{th} patch is an index of the t1^{th} patch; wherein the w1^{th} patch is an unmatched patch in the patch set of the i^{th} frame of the point cloud.

8. The apparatus according to claim 7, wherein the determining unit is configured for determining M global matched patch sets based on matched patch sets of the N frames of the point cloud by:
starting with i=N-1, iteratively performing the following steps until i=1:
selecting the i^{th} frame of the point cloud:
traversing the matched patch set of the reference frame of the i^{th} frame of the point cloud, and determining whether the index of the t1^{th} patch is the same as the target index of the w1^{th} patch;
when the index of the t1^{th} patch is different from any of target indexes of all patches in the matched patch set of the i^{th} frame of the point cloud, deleting the t1^{th} patch from the matched patch set of the reference frame; and
setting i=i-1;
when i is equal to 1, obtaining the M global matched patch sets, wherein an m^{th} set in the M global matched patch sets comprises an m^{th} processed patch in each of matched patch sets of a 0^{th} frame of the point cloud to an (N-2)^{th} frame of the point cloud and an m^{th} processed patch in a matched patch set of an (N-1)^{th} frame of the point cloud.

9. A computer-readable storage medium, comprising program code, which when the program code is run on a computer, causes the computer to perform the method according to any one of claims 1 to 4.

## Patentansprüche

1. Verfahren zur Kodierung von Punktwolken, umfassend:
Erlangen (S601) von Patch-Sätzen aus N Frames einer Punktwolke, wobei N eine ganze Zahl größer als 2 ist;
Verarbeiten eines der Frames in den N Frames der Punktwolke, um einen Patch-Satz des Frames als einen übereinstimmenden Patch-Satz festzulegen;
Verarbeiten eines jeden verbleibenden Frames der Punktwolke in den N Frames der Punktwolke durch Durchführen (S602), für jeden i-ten Frame der Punktwolke, wobei i = {1... N-2, N-] },
eines Abgleichvorgangs an einem oder mehreren Patches in einem übereinstimmenden Patch-Satz eines Referenz-Frames eines i-^{ten} Frames der Punktwolke in den N Frames der Punktwolke und einem oder mehreren nicht übereinstimmenden Patches in einem Patch-Satz des i-^{ten} Frames der Punktwolke, um einen übereinstimmenden Patch-Satz des i-ten Frames der Punktwolke zu erlangen, wobei der übereinstimmende Patch-Satz des i-ten Frames der Punktwolke n Patches umfasst, jeder der n Patches mit einem Patch in dem übereinstimmenden Patch-Satz des Referenz-Frames des i-ten Frames der Punktwolke übereinstimmt und n eine ganze Zahl größer als oder gleich 0 ist, wobei ein Referenz-Frame des i-ten Frames der Punktwolke einer der N Frames der Punktwolke ist, der vor dem i-ten Frame der Punktwolke verarbeitet wird;
Bestimmen (S603) von M global übereinstimmenden Patch-Sätzen basierend auf übereinstimmenden Patch-Sätzen der N Frames der Punktwolke, wobei mindestens einer der M global übereinstimmenden Patch-Sätze ein Satz von Patches ist, die über N1 Frames der Punktwolke hinweg übereinstimmen, M eine ganze Zahl größer als 0 ist und die N1 Frames der Punktwolke sämtliche oder einige Frames der Punktwolke in den N-Frames der Punktwolke sind;
Packen, für jeden Frame der Punktwolke, des global übereinstimmenden Patches in dem mindestens einen der M global übereinstimmenden Patch-Sätze, gefolgt vom Packen eines nicht-global übereinstimmenden Patches, um eine Belegungskarte jedes Frames der Punktwolke der N Frames der Punktwolke zu erlangen; und
Enkodieren der Belegungskarte jedes Frames der Punktwolke der N Frames der Punktwolke, um einen Bitstrom von Belegungskarten der N Frames der Punktwolke zu erlangen.

2. Verfahren nach Anspruch 1, wobei M kleiner als oder gleich P ist und P eine Menge an Patches in einem übereinstimmenden Patch-Satz darstellt, der eine Mindestmenge an übereinstimmenden Patches in den übereinstimmenden Patch-Sätzen der N Frames der Punktwolke umfasst.

3. Verfahren nach Anspruch 1 oder 2, wobei das Durchführen eines Abgleichvorgangs an einem oder mehreren Patches in einem übereinstimmenden Patch-Satz eines Referenz-Frames eines i-ten Frames der Punktwolke in den N Frames der Punktwolke und einem oder mehreren nicht übereinstimmenden Patches in einem Patch-Satz des i-ten Frames der Punktwolke, um einen übereinstimmenden Patch-Satz des i-ten Frames der Punktwolke zu erlangen, Folgendes umfasst:
Durchlaufen des übereinstimmenden Patch-Satzes des Referenz-Frames des i-ten Frames der Punktwolke und Durchführen eines Abgleichvorgangs an einem t1-ten Patch in dem übereinstimmenden Patch-Satz des Referenz-Frames und einem w1-ten Patch in dem Patch-Satz des i-ten Frames der Punktwolke; und
wenn der t1-te Patch mit dem w1-ten Patch übereinstimmt, Speichern des w1-ten Patches in dem übereinstimmenden Patch-Satz des i-ten Frames der Punktwolke, wobei ein Zielindex des w1-ten Patches ein Index des t1-ten Patches ist; wobei
der w1-te Patch ein nicht übereinstimmender Patch in dem Patch-Satz des i-ten Frames der Punktwolke ist.

4. Verfahren nach Anspruch 3, wobei das Bestimmen von M global übereinstimmenden Patch-Sätzen basierend auf übereinstimmenden Patch-Sätzen der N Frames der Punktwolke Folgendes umfasst:
Beginnen mit i=N-1, iteratives Durchführen der folgenden Schritte bis i=1:
Auswählen des i-ten Frames der Punktwolke;
Durchlaufen des übereinstimmenden Patch-Satzes des Referenz-Frames des i-ten Frames der Punktwolke und Bestimmen, ob der Index des t1-ten Patches derselbe ist wie der Zielindex des w1-ten Patches;
wenn sich der Index des t1-ten Patches von einem der Zielindizes sämtlicher Patches in dem übereinstimmenden Patch-Satz des i-ten Frames der Punktwolke unterscheidet, Löschen des t1-ten Patches aus dem übereinstimmenden Patch-Satz des Referenz-Frames; und
Festlegen von i=i-1;
wenn i gleich 1 ist, Erlangen der M global übereinstimmenden Patch-Sätze, wobei ein m-ter Satz in den M global übereinstimmenden Patch-Sätzen einen m-ten verarbeiteten Patch in jedem der übereinstimmenden Patch-Sätze eines 0-ten Frames der Punktwolke bis zu einem (N-2)-ten Frame der Punktwolke und einem m-ten verarbeiteten Patch in einem übereinstimmenden Patch-Satz eines (N-1)-ten Frames der Punktwolke umfasst.

5. Einrichtung zur Kodierung von Punktwolken, umfassend:
eine Erlangungseinheit, die zum Erlangen von Patch-Sätzen von N Frames einer Punktwolke konfiguriert ist, wobei N eine ganze Zahl größer als 2 ist;
eine Abgleicheinheit, die zu Folgendem konfiguriert ist: Verarbeiten eines der Frames in den N Frames der Punktwolke, um einen Patch-Satz des Frames als übereinstimmenden Patch-Satz festzulegen, und Verarbeiten eines jeden verbleibenden Frames der Punktwolke in den N Frames der Punktwolke durch Durchführen, für jeden i-ten Frame der Punktwolke, wobei i = {1... N-2, N-] },
eines Abgleichvorgangs an einem oder mehreren Patches in einem übereinstimmenden Patch-Satz eines Referenz-Frames eines i-^{ten} Frames der Punktwolke in den N Frames der Punktwolke und einem oder mehreren nicht übereinstimmenden Patches in einem Patch-Satz des i-^{ten} Frames der Punktwolke, um einen übereinstimmenden Patch-Satz des i-ten Frames der Punktwolke zu erlangen, wobei der übereinstimmende Patch-Satz des i-ten Frames der Punktwolke n Patches umfasst, jeder der n Patches mit einem Patch in dem übereinstimmenden Patch-Satz des Referenz-Frames des i-ten Frames der Punktwolke übereinstimmt und n eine ganze Zahl größer als oder gleich 0 ist, wobei ein Referenz-Frame des i-ten Frames der Punktwolke einer der N Frames der Punktwolke ist, der vor dem i-ten Frame der Punktwolke verarbeitet wird;
eine Bestimmungseinheit, die zum Bestimmen von M global übereinstimmenden Patch-Sätzen basierend auf übereinstimmenden Patch-Sätzen der N Frames der Punktwolke konfiguriert ist, wobei mindestens einer der M global übereinstimmenden Patch-Sätze ein Satz von Patches ist, die über N1 Frames der Punktwolke hinweg übereinstimmen, M eine ganze Zahl größer als 0 ist und die N1 Frames der Punktwolke sämtliche oder einige Frames der Punktwolke in den N-Frames der Punktwolke sind;
ein Packmodul, das zum Packen, für jeden Frame der Punktwolke, des global übereinstimmenden Patches in dem mindestens einen der M global übereinstimmenden Patch-Sätze konfiguriert ist, gefolgt vom Packen eines nicht-global übereinstimmenden Patches, um eine Belegungskarte jedes Frames der Punktwolke N Frames der Punktwolke zu erlangen; und
ein Enkodierungsmodul, das zum Enkodieren der Belegungskarte jedes Frames der Punktwolke der N Frames der Punktwolke konfiguriert ist, um einen Bitstrom von Belegungskarten der N Frames der Punktwolken zu erlangen.

6. Einrichtung nach Anspruch 5, wobei M kleiner als oder gleich P ist und P eine Menge an Patches in einem übereinstimmenden Patch-Satz darstellt, der eine Mindestmenge an übereinstimmenden Patches in den übereinstimmenden Patch-Sätzen der N Frames der Punktwolke umfasst.

7. Einrichtung nach Anspruch 5 oder 6, wobei die Abgleicheinheit zum Durchführen eines Abgleichvorgangs an einem oder mehreren Patches in einem übereinstimmenden Patch-Satz eines Referenz-Frames eines i-ten Frames der Punktwolke in den N Frames der Punktwolke und einem oder mehreren nicht übereinstimmenden Patches in einem Patch-Satz des i-ten Frames der Punktwolke konfiguriert ist, um einen übereinstimmenden Patch-Satz des i-ten Frames der Punktwolke durch Folgendes zu erlangen:
Durchlaufen des übereinstimmenden Patch-Satzes des Referenz-Frames des i-ten Frames der Punktwolke und Durchführen eines Abgleichvorgangs an einem t1-ten Patch in dem übereinstimmenden Patch-Satz des Referenz-Frames und einem w1-ten Patch in dem Patch-Satz des i-ten Frames der Punktwolke; und
wenn der t1-te Patch mit dem w1-ten Patch übereinstimmt, Speichern des w1-ten Patches in dem übereinstimmenden Patch-Satz des i-ten Frames der Punktwolke, wobei ein Zielindex des w1-ten Patches ein Index des t1-ten Patches ist; wobei
der w1-te Patch ein nicht übereinstimmender Patch in dem Patch-Satz des i-ten Frames der Punktwolke ist.

8. Einrichtung nach Anspruch 7, wobei die Bestimmungseinheit zum Bestimmen von M global übereinstimmenden Patch-Sätzen basierend auf den übereinstimmenden Patch-Sätzen der N Frames der Punktwolke durch Folgendes konfiguriert ist:
Beginnen mit i=N-1, iteratives Durchführen der folgenden Schritte bis i=1:
Auswählen des i-ten Frames der Punktwolke;
Durchlaufen des übereinstimmenden Patch-Satzes des Referenz-Frames des i-ten Frames der Punktwolke und Bestimmen, ob der Index des t1-ten Patches derselbe ist wie der Zielindex des w1-ten Patches;
wenn sich der Index des t1-ten Patches von einem der Zielindizes sämtlicher Patches in dem übereinstimmenden Patch-Satz des i-ten Frames der Punktwolke unterscheidet, Löschen des t1-ten Patches aus dem übereinstimmenden Patch-Satz des Referenz-Frames; und
Festlegen von i=i-1;
wenn i gleich 1 ist, Erlangen der M global übereinstimmenden Patch-Sätze, wobei ein m-ter Satz in den M global übereinstimmenden Patch-Sätzen einen m-ten verarbeiteten Patch in jedem der übereinstimmenden Patch-Sätze eines 0-ten Frames der Punktwolke bis zu einem (N-2)-ten Frame der Punktwolke und einem m-ten verarbeiteten Patch in einem übereinstimmenden Patch-Satz eines (N-1)-ten Frames der Punktwolke umfasst.

9. Computerlesbares Speichermedium, umfassend Programmkode, der, wenn der Programmkode auf einem Computer ausgeführt wird, den Computer dazu veranlasst, das Verfahren nach einem der Ansprüche 1 bis 4 durchzuführen.

## Revendications

1. Procédé de codage de nuages de points, comprenant :
l'obtention (S601) d'ensembles de correctifs de N trames d'un nuage de points, dans lequel N est un nombre entier supérieur à 2 ;
le traitement d'une des trames dans les N trames du nuage de points pour définir un ensemble de correctifs de la trame en tant qu'ensemble de correctifs correspondants ;
le traitement de chaque trame restante du nuage de points dans les N trames du nuage de points en effectuant (S602), pour chaque i^{ème} trame du nuage de points, dans lequel i = {1... N-2, N-] }, une opération de mise en correspondance sur un ou plusieurs correctifs dans un ensemble de correctifs correspondants d'une trame de référence d'une i^{ème} trame du nuage de points dans les N trames du nuage de points et un ou plusieurs correctifs non correspondants dans un ensemble de correctifs de la i^{ème} trame du nuage de points, pour obtenir un ensemble de correctifs correspondants de la i^{ème} trame du nuage de points, dans lequel l'ensemble de correctifs correspondants de la i^{ème} trame du nuage de points comprend n correctifs, chacun des n correctifs correspond à un correctif dans l'ensemble de correctifs correspondants de la trame de référence de la i^{ème} trame du nuage de points, et n est un nombre entier supérieur ou égal à 0, dans lequel une trame de référence de la i^{ème} trame du nuage de points est l'une quelconque des N trames du nuage de points qui est traité avant la i^{ème} trame du nuage de points ;
la détermination (S603) de M ensembles de correctifs correspondants globaux en fonction d'ensembles de correctifs correspondants des N trames du nuage de points, dans lequel au moins l'un des M ensembles de correctifs correspondants globaux est un ensemble de correctifs qui correspondent à N1 trames du nuage de points, M est un nombre entier supérieur à 0, et les N1 trames du nuage de points sont tout ou partie des trames du nuage de points dans les N trames du nuage de points ;
le regroupement, pour chaque trame du nuage de points, du correctif correspondant global dans l'au moins un des M ensembles de correctifs correspondants globaux, puis le regroupement d'un correctif correspondant non global pour obtenir une carte d'occupation de chaque trame du nuage de points des N trames du nuage de points ; et
le codage de la carte d'occupation de chaque trame du nuage de points des N trames du nuage de points pour obtenir un flux binaire de cartes d'occupation des N trames du nuage de points.

2. Procédé selon la revendication 1, dans lequel M est inférieur ou égal à P, et P représente une quantité de correctifs dans un ensemble de correctifs correspondants qui comprend une quantité minimale de correctifs correspondants dans les ensembles de correctifs correspondants des N trames du nuage de points.

3. Procédé selon la revendication 1 ou 2, dans lequel la réalisation d'une opération de mise en correspondance sur un ou plusieurs correctifs dans un ensemble de correctifs correspondants d'une trame de référence d'une i^{ème} trame du nuage de points dans les N trames du nuage de points et un ou plusieurs correctifs non correspondants dans un ensemble de correctifs de la i^{ème} trame du nuage de points, pour obtenir un ensemble de correctifs correspondants de la i^{ème} trame du nuage de points comprend :
le déplacement de l'ensemble de correctifs correspondants de la trame de référence de la i^{ème} trame du nuage de points, et la réalisation d'une opération de mise en correspondance sur un t1^{ème} correctif dans l'ensemble de correctifs correspondants de la trame de référence et sur un w1^{ème} correctif dans l'ensemble de correctifs de la i^{ème} trame du nuage de points ; et
lorsque le t1^{ème} correctif correspond au w1^{ème} correctif, le stockage du w1^{ème} correctif dans l'ensemble de correctifs correspondants de la i^{ème} trame du nuage de points, dans lequel un indice cible du w1^{ème} correctif est un indice du t1^{ème} correctif ; dans lequel
le w1^{ème} correctif est un correctif non correspondant dans l'ensemble de correctifs de la i^{ème} trame du nuage de points.

4. Procédé selon la revendication 3, dans lequel la détermination de M ensembles de correctifs correspondants globaux en fonction des ensembles de correctifs correspondants des N trames du nuage de points comprend :
le démarrage par i=N-1, en effectuant de manière itérative les étapes suivantes jusqu'à i=1 :
la sélection de la i^{ème} trame du nuage de points ;
le déplacement de l'ensemble de correctifs correspondants de la trame de référence de la i^{ème} trame du nuage de points, et le fait de déterminer si l'indice du t1^{ème} correctif est le même que l'indice cible du w1^{ème} correctif ;
lorsque l'indice du t1^{ème} correctif est différent de l'un quelconque des indices cibles de tous les correctifs dans l'ensemble de correctifs correspondants de la i^{ème} trame du nuage de points, la suppression du t1^{ème} correctif de l'ensemble de correctifs correspondants de la trame de référence ; et
le réglage sur i=i-1 ;
lorsque i est égal à 1, l'obtention des M ensembles de correctifs correspondants globaux, dans lequel un m^{ème} ensemble dans les M ensembles de correctifs correspondants globaux comprend un m^{ème} correctif traité dans chacun des ensembles de correctifs correspondants d'une 0^{ème} trame du nuage de points à une (N-2)^{ème} trame du nuage de points et un m^{ème} correctif traité dans un ensemble de correctifs correspondants d'une (N-1)^{ème} trame du nuage de points.

5. Appareil de codage de nuages de points comprenant :
une unité d'obtention, configurée pour obtenir des ensembles de correctifs de N trames d'un nuage de points, dans lequel N est un nombre entier supérieur à 2 ;
une unité de mise en correspondance, configurée pour traiter l'une des trames dans les N trames du nuage de points pour définir un ensemble de correctifs de la trame comme un ensemble de correctifs correspondants, et traiter chaque trame restante du nuage de points dans les N trames du nuage de points en effectuant, pour chaque i^{ème} trame du nuage de points, dans lequel i = {1... N-2, N-] },
une opération de mise en correspondance sur un ou plusieurs correctifs dans un ensemble de correctifs correspondants d'une trame de référence d'une i^{ème} trame du nuage de points dans les N trames du nuage de points et un ou plusieurs correctifs non correspondants dans un ensemble de correctifs de la i^{ème} trame du nuage de points, pour obtenir un ensemble de correctifs correspondants de la i^{ème} trame du nuage de points, dans lequel l'ensemble de correctifs correspondants de la i^{ème} trame du nuage de points comprend n correctifs, chacun des n correctifs correspond à un correctif dans l'ensemble de correctifs correspondants de la trame de référence de la i^{ème} trame du nuage de points, et n est un nombre entier supérieur ou égal à 0, dans lequel une trame de référence de la i^{ème} trame du nuage de points est l'une quelconque des N trames du nuage de points qui est traité avant la i^{ème} trame du nuage de points ;
une unité de détermination, configurée pour déterminer M ensembles de correctifs correspondants globaux en fonction d'ensembles de correctifs correspondants des N trames du nuage de points, dans lequel au moins l'un des M ensembles de correctifs correspondants globaux est un ensemble de correctifs qui correspondent à N1 trames du nuage de points, M est un nombre entier supérieur à 0, et les N1 trames du nuage de points sont tout ou partie des trames du nuage de points dans les N trames du nuage de points ;
un module de regroupement, configuré pour regrouper, pour chaque trame du nuage de points, le correctif correspondant global dans l'au moins un des M ensembles de correctifs correspondants globaux, puis le regroupement d'un correctif correspondant non global pour obtenir une carte d'occupation de chaque trame du nuage de points des N trames du nuage de points ; et
un module de codage, configuré pour coder la carte d'occupation de chaque trame du nuage de points des N trames du nuage de points pour obtenir un flux binaire de cartes d'occupation des N trames des nuages de points.

6. Appareil selon la revendication 5, dans lequel M est inférieur ou égal à P, et P représente une quantité de correctifs dans un ensemble de correctifs correspondants qui comprend une quantité minimale de correctifs correspondants dans les ensembles de correctifs correspondants des N trames du nuage de points.

7. Appareil selon la revendication 5 ou 6, dans lequel l'unité de mise en correspondance est configurée pour réaliser une opération de mise en correspondance sur un ou plusieurs correctifs dans un ensemble de correctifs correspondants d'une trame de référence d'une i^{ème} trame du nuage de points dans les N trames du nuage de points et un ou plusieurs correctifs non correspondants dans un ensemble de correctifs de la i^{ème} trame du nuage de points, pour obtenir un ensemble de correctifs correspondants de la i^{ème} trame du nuage de points via :
le déplacement de l'ensemble de correctifs correspondants de la trame de référence de la i^{ème} trame du nuage de points, et la réalisation d'une opération de mise en correspondance sur un t1^{ème} correctif dans l'ensemble de correctifs correspondants de la trame de référence et sur un w1^{ème} correctif dans l'ensemble de correctifs de la i^{ème} trame du nuage de points ; et
lorsque le t1^{ème} correctif correspond au w1^{ème} correctif, le stockage du w1^{ème} correctif dans l'ensemble de correctifs correspondants de la i^{ème} trame du nuage de points, dans lequel un indice cible du w1^{ème} correctif est un indice du t1^{ème} correctif ; dans lequel
le w1^{ème} correctif est un correctif non correspondant dans l'ensemble de correctifs de la i^{ème} trame du nuage de points.

8. Appareil selon la revendication 7, dans lequel l'unité de détermination est configurée pour déterminer M ensembles de correctifs correspondants globaux en fonction d'ensembles de correctifs correspondants des N trames du nuage de points via :
le démarrage par i=N-1, en effectuant de manière itérative les étapes suivantes jusqu'à i=1 :
la sélection de la i^{ème} trame du nuage de points ;
le déplacement de l'ensemble de correctifs correspondants de la trame de référence de la i^{ème} trame du nuage de points, et le fait de déterminer si l'indice du t1^{ème} correctif est le même que l'indice cible du w1^{ème} correctif ;
lorsque l'indice du t1^{ème} correctif est différent de l'un quelconque des indices cibles de tous les correctifs dans l'ensemble de correctifs correspondants de la i^{ème} trame du nuage de points, la suppression du t1^{ème} correctif de l'ensemble de correctifs correspondants de la trame de référence ; et
le réglage sur i=i-1 ;
lorsque i est égal à 1, l'obtention des M ensembles de correctifs correspondants globaux, dans lequel un m^{ème} ensemble dans les M ensembles de correctifs correspondants globaux comprend un m^{ème} correctif traité dans chacun des ensembles de correctifs correspondants d'une 0^{ème} trame du nuage de points à une (N-2)^{ème} trame du nuage de points et un m^{ème} correctif traité dans un ensemble de correctifs correspondants d'une (N-1)^{ème} trame du nuage de points.

9. Support de stockage lisible par ordinateur, comprenant un code de programme, qui lorsque le code de programme est exécuté sur un ordinateur, amène l'ordinateur à mettre en œuvre le procédé selon l'une quelconque des revendications 1 à 4.
